(19) Europäisches Patentamt
European Patent Office
Office européen des brevets

(11) **EP 2 702 445 B1**

(12) **EUROPEAN PATENT SPECIFICATION**

(45) Date of publication and mention
of the grant of the patent:
**13.02.2019 Bulletin 2019/07**

(21) Application number: **12777155.8**

(22) Date of filing: **25.04.2012**

(51) Int Cl.:
$G02F\ 1/133^{(2006.01)}$   $G09G\ 3/36^{(2006.01)}$

(86) International application number:
**PCT/US2012/034967**

(87) International publication number:
**WO 2012/149001 (01.11.2012 Gazette 2012/44)**

(54) **DUAL LCD DISPLAY WITH COLOR CORRECTION TO COMPENSATE FOR VARYING ACHROMATIC LCD PANEL DRIVE CONDITIONS**

DOPPEL-LCD-ANZEIGE MIT FARBKORREKTUR ZUR KOMPENSATION VERÄNDERLICHER ACHROMATISCHER LCD-PANEL-LAUFWERKSZUSTÄNDE

SYSTÈME D'AFFICHAGE À DEUX PANNEAUX À CRISTAUX LIQUIDES AVEC CORRECTION DE COULEURS POUR COMPENSER LES CONDITIONS D'EXCITATION VARIABLES DU PANNEAU À CRISTAUX LIQUIDES ACHROMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.04.2011 US 201161479958 P**

(43) Date of publication of application:
**05.03.2014 Bulletin 2014/10**

(73) Proprietor: **Dolby Laboratories Licensing Corporation**
**San Francisco, CA 94103 (US)**

(72) Inventors:
• **ERINJIPPURATH, Gopal**
**San Francisco, CA 94103-4813 (US)**

• **WAN, Chun, C.**
**Sunnyvale, CA 94085 (US)**

(74) Representative: **Dolby International AB**
**Patent Group Europe**
**Apollo Building, 3E**
**Herikerbergweg 1-35**
**1101 CN Amsterdam Zuidoost (NL)**

(56) References cited:
**EP-A2- 2 569 668        EP-A2- 2 684 184**
**US-A1- 2007 242 028    US-A1- 2008 088 649**
**US-A1- 2008 088 649    US-A1- 2011 032 454**
**US-B2- 7 821 474**

**Description**

CROSS-REFERENCE TO RELATED APPLICATIONS

This application claims priority to U.S. Provisional patent application No. 61/479,958 filed April 28, 2011.

BACKGROUND OF THE INVENTION

1. Field of the Invention

The invention relates to a dual LCD panel display including two modulating LCD panels: an achromatic LCD panel and a color LCD panel. In a class of embodiments, the inventive dual LCD panel display includes an achromatic LCD panel (modulated by achromatic panel drive values) and a color LCD panel (modulated by color panel drive values), and is configured to perform color correction on the color panel drive values (in response to the achromatic panel drive values) to improve the accuracy of color reproduction by the display.

2. Background of the Invention

Throughout this disclosure including in the claims, the expression performing an operation "on" signals or data (e.g., filtering, scaling, or transforming the signals or data) is used in a broad sense to denote performing the operation directly on the signals or data, or on processed versions of the signals or data (e.g., on versions of the signals that have undergone preliminary filtering prior to performance of the operation thereon).
Throughout this disclosure including in the claims, the noun "display" and the expression "display system" are used as synonyms. The expression "high dynamic range" display (HDR display) herein denotes a display having a dynamic range of greater than 800 to 1. Recent advances in technology have produced displays claiming contrast ratios of more than 1,000,000 to 1.
Throughout this disclosure including in the claims, the expression "dual LCD panel display" is used to denote a display system including two modulating LCD panels (an achromatic LCD panel and a color LCD panel), and a backlight system for illuminating the LCD panels. The backlight system can be a spatially variable backlight system (e.g., a spatially variable backlight panel comprising an array of individually controllable LEDs, or other spatially variable backlight panel) or a fixed backlight. The achromatic LCD panel and the color LCD panel are arranged so that one (a "first" one) of them is backlit by the backlight system and the other one of them is backlit by light transmitted through the first one of the LCD panels. A dual LCD panel display whose backlight system is a spatially variable backlight system is an example of a "dual modulation display" as defined herein.
Throughout this disclosure, the expression "dual modulation display" is used to denote a display system including a modulating front LCD panel system and a spatially variable backlight system (e.g., a spatially variable backlight panel comprising an array of individually controllable LEDs, or another spatially variable backlight panel) for backlighting the front LCD panel system. Examples of a modulating front LCD panel system of a dual modulation display include (but are not limited to) a single LCD panel comprising an array of LCD elements; and two LCD panels (an achromatic LCD panel and a color LCD panel) arranged so that one (a "first" one) of the LCD panels is backlit by the backlight system and the other one of the LCD panels is backlit by light transmitted through the first one of the LCD panels.
Several embodiments of dual LCD panel displays and high dynamic range displays are described in U.S. Patent Application No. 12/780,749, filed on May 14, 2010, by Gopal Erinjippurath and John Gilbert. Several methods and systems for driving the achromatic LCD panel and color LCD panel of a dual LCD panel display are described in that application.
Contrast ratio is defined as the ratio of the brightest to darkest colors that a display is capable of producing. High contrast ratios are desirable for accurate image reproduction, but are often limited in traditional displays. One traditional display consists of a Liquid Crystal Display (LCD) panel and a backlight, typically a cold cathode fluorescent lamp (CCFL) disposed behind the LCD panel. The display contrast ratio is set by the LCD contrast ratio, which is typically under 1000:1. A dual LCD panel displays can provide a greater contrast ratio than can a traditional display or a dual modulation display that includes only a single LCD panel.
When dual modulation display or dual LCD display includes a spatially variable backlight system, the backlight drive values (e.g., LED drive values) should be chosen to achieve an optimal backlight, including by maximizing contrast, while minimizing visual artifacts (e.g., white clipping, black clipping, and halos) and temporal variations of these artifacts and maximizing energy efficiency. The ideal solution balances these criteria for a given application. Preferably, the backlight drive values control the backlight system to mitigate display artifacts such as bright pixel clipping, dark clipping and contouring, and output variation with motion and image deformation.
In a dual modulation display including a spatially variable LED backlight system, the contrast at the LCD front panel system is increased by multiplication by the contrast of the LED backlight. Usually, the backlight layer emits light corresponding to a low-resolution version of an image, and the LCD front panel system (which has a higher resolution) transmits light (by selectively blocking light from the backlight layer) to display a high-resolution version of the image. In effect, the high and low resolution "images" are multiplied optically.

In a dual modulation display including a spatially variable LED backlight system, nearby LCD pixels typically have similar backlighting. If an input image contains pixel values beyond the contrast range of an LCD panel, the backlight will not be optimal for all LCD pixels. Typically the choice of backlighting level for a local area of an LCD panel is not optimal for all LCD pixels in the area. For some LCD pixels the backlight might be too high, while for others the backlight might be too low. The backlighting should be set to best represent the input signal from a perceptual standpoint, i.e., the backlight level should be chosen to allow the best perceptual representation of the bright and dark pixels, which often cannot both be accurately represented.

If backlighting is too high, accurate low levels including black are compromised. Input image pixel values requiring LCD values near the minimum LCD transmittance are contoured (quantized), and pixels requiring LCD values below the minimum LCD transmittance are clipped to the lowest level. If the backlighting is too low, pixels above the backlight level are clipped to the maximum LCD level. These clipping and contouring artifacts may occur in traditional constant backlit LCD displays.

Motion video (display of a changing sequence of images) adds additional problems. Artifacts within a still image may be less noticeable than those which change over time and with motion. In typical scenes, both white and black clipped pixels are often present and the clipped pixels are visible. If the shape and/or intensity of the backlight signal changes as the image features move, the artifacts will also change. For clipping and contouring artifacts, this results in changes in both the actual pixels that clip and contour, and the brightness of affected pixels. If halos are present, a changing backlight results in changing halos. In all cases, the effect of the changing backlight intensifies the clipping, contouring, and halo artifacts.

To prevent motion artifacts from occurring, the shape and position of a displayed image and the corresponding backlight should remain stable. This means that the backlight should not change in response to simple object motion (e.g., translation of a displayed object) to prevent the backlight pattern from moving (e.g., translating) along with the object. In other words, the backlight should be invariant to object location. It also means that as the displayed image deforms and changes, the backlighting should change in a smooth, deterministic manner corresponding to the changes in the input image.

EP 2 569 668 A2 discloses a display providing increased contrast and resolution via a first LCD panel energized to generate an image and a second LCD panel configured to increase the contrast of the image. The second panel is an LCD panel without color filters and is configured to increase contrast by decreasing black levels of dark portions of images using polarization rotation and filtration. The second LCD panel is of higher resolution than the first LCD panel. The panels are be illuminated by a dimmed monochrome or multi primary backlight. The panels are preferably arranged such that active layers in each panel are as close together as possible. Brightness is maintained by the combination of reusing polarization between the panels and by not going through more than one set of color filters. Improved contrast is a result of using multiple light modulators in series.

EP 2 684 184 A2 discloses a high contrast high resolution display using an image chain comprising a plurality of downstream high resolution modulators. The modulators are illuminated by a locally dimmed backlight. Polarization control is maintained throughout the image chain via reference and analyzing polarizers combined with non-depolarizing layers. The modulators are grayscale and modulate at sub-pixel level. A color panel is maintained for color reproduction. Diffusion in the chain is matched to a resolution of the image content carried in the light such that the effects of local dimming and sub-pixel resolution are preserved. Brightness enhancement films may be utilized to enhance brightness and maintain polarization control.

US 2008/088649 A1 discloses an LCD unit including first and second LCD panels stacked one on another. An image-data processing unit outputs monochrome image data to the second LCD panel, and color image data to the first LCD panel. The monochrome image data specifies a full transmission for a pixel having a luminance not less than a threshold, the original gray-scale level for a pixel having a luminance less than the threshold. The color image data is generated based on the monochrome image data and input image data.

SUMMARY OF THE INVENTION

The invention is defined by the independent claims, taking due account of any element which is equivalent to an element specified in the claims. The dependent claims concern optional features of some embodiments of the invention. In a class of embodiments, the inventive dual LCD panel display comprises a color LCD panel (sometimes referred to herein as an "image-generating" panel), an LCD panel without color filters (an achromatic LCD panel), a backlight, and an LCD controller configured to generate color panel drive values (determining a drive signal for the color LCD panel) and achromatic panel drive values (determining a drive signal for the achromatic LCD panel). In some embodiments, the dual LCD panel display is implemented as a high dynamic range display. The controller is configured to generate the color panel drive values in a manner intended to compensate dynamically for variations in the color of light transmitted by the achromatic LCD panel (to the color LCD panel, in typical embodiments in which the color LCD panel is located downstream from the achromatic panel) due to varying drive conditions of the achromatic LCD panel (e.g., varying drive conditions due to variations in a sequence of input images to be displayed). In typical embodiments, each color panel drive value (for driving a pixel of the color LCD panel) is read from a look-up table (LUT) in response to an input image pixel (e.g., a trio of input image color components $R_{in}$, $G_{in}$, and $B_{in}$) and at least one value determining a corresponding achromatic panel drive value set (e.g., a single achromatic panel drive value, P, or a trio of achromatic panel drive values, $P_1$, $P_2$, and $P_3$, for driving three cells of a pixel of the achromatic LCD panel). In some embodiments, the controller is configured to determine an achromatic panel drive value set and a color panel drive value set in response to an input image pixel (i.e., each input image pixel determined by an input image signal), and the controller includes an LUT and is configured to read the color panel drive set from the look-up table in response to the input image pixel and at least one value determining the achromatic panel drive value set. Alternatively, the color panel drive values are otherwise dynamically generated (e.g., computed on the fly, for example in a graphics processor (GPU) having massively parallel computing architecture) in response to a sequence of input image pixels (and typically also a corresponding sequence of achromatic panel drive value sets). Regardless of whether the color panel drive values are read from an LUT or otherwise generated, their generation in accordance with the invention will sometimes be described herein as generation with (or by) "color correction," "dynamic color correction," "color rotation," or "dynamic color rotation," since their generation compensates dynamically (e.g., by color correction or rotation) for variations in the color of light transmitted by the display's achromatic LCD panel due to varying drive conditions of the achromatic LCD panel. In some embodiments, the dynamic color correction (or rotation) also otherwise accounts for color variations of the optical stack in response to varying input pixels, e.g., to improve the accuracy of color reproduction by the display. For example, the dynamic color correction may account for nonlinearity in the optical multiplication of the two LCD panels (e.g., to implement dynamic grey-scale tracking offset) by accounting for color variations of the optical stack in response to the input pixels (e.g., to a first order linear approximation or a second order approximation as defined by a forward model).

In typical implementations, the achromatic LCD panel is positioned between the backlight (which may comprise an array of backlight sources or a single backlight source) and the color LCD panel, such that in operation, the achromatic LCD panel is backlit and light passing through the achromatic LCD panel from the backlight illuminates the color LCD panel. In a typical implementation, the achromatic LCD panel produces a base version of an image (determined by input image pixels) to be displayed by the display, and the color LCD panel further modulates the base image to produce the image to be displayed. The base image may comprise a brightness intensity in proportion to brightness intensities of the image to be displayed. The brightness intensity of the base image may be a sharper image than the image to be displayed, or the base image may be a blurred approximation of brightness levels in proportion to brightness levels of the image to be displayed. The resolution of the achromatic LCD panel may be higher or lower than (but is typically higher than) that of the color LCD panel.

In typical embodiments, the controller includes an achromatic LCD panel drive module including a look-up table (an achromatic drive LUT) which outputs achromatic panel drive values in response to intermediate values (e.g., interpolated and filtered luminance values generated from input image pixels) and a color LCD panel drive module including another look-up table (a color drive LUT) which outputs color panel drive values in response to the input image pixels (and typically also the achromatic panel drive values, or intermediate values employed to generate the achromatic panel drive values). The color drive LUT implements dynamic color correction (e.g., interpolated color rotation) to account (compensate) for variations in the color of light transmitted by the achromatic LCD panel (to the color LCD panel) due to varying drive conditions of the achromatic LCD panel. Optionally also, the dynamic color correction also otherwise accounts for color variations of the optical stack in response to varying input pixels (e.g., to a first order linear approximation as defined by a forward model) to improve the accuracy of the color reproduction of the display. Optionally also, the dynamic color correction also accounts for nonlinearity in the optical multiplication of the two LCD panels (e.g., to implement dynamic grey-scale tracking offset) by accounting for color variations of the optical stack in response to the input pixels (e.g., to a second order approximation as defined by the forward model). Typically, the color drive LUT outputs a set of color panel drive values ($R_{out}$, $G_{out}$, $B_{out}$) in response to each set of input color values ($R_{in}$, $G_{in}$, $B_{in}$) and a set of achromatic panel drive values (e.g., a set of three values $P_1$, $P_2$, and $P_3$, or a single value "P") generated by the controller in response to the set of input color values. Sets of color panel drive values ($R_{out}$, $G_{out}$, $B_{out}$) can be predetermined and loaded in the color drive LUT. The predetermination of these values can be a result of preliminary measurements on the display in which the display is driven by sets of input color values (Rin, Gin, Bin), and sets of achromatic panel drive values ($P_1$, $P_2$, $P_3$) determined from the sets of input color values, and the actual color emitted by the display in response to each set of input color values (Rin, Gin, Bin) and the corresponding set of achromatic panel drive values ($P_1$, $P_2$, $P_3$, or P) is measured and compared to a target (desired) set of colors to be displayed in response to said set of input color values and corresponding achromatic panel drive value set. As a result of the measurements and comparisons, a set of corrected color panel drive values is determined for each set of input image color values, such that the display will display the target color in response to the set of corrected color panel drive values and the corresponding achromatic panel drive value set. The corrected color panel drive values are loaded in the color drive LUT. A sparse set of the corrected color panel drive values can be determined (from a sparse set of input image color values and corresponding achromatic panel drive values) and then interpolation can be performed thereon to generate a full set of corrected color panel drive values (e.g., including a trio of output color panel drive values, $R_{out}$, $G_{out}$, and $B_{out}$, for each possible set of input color values Rin, Gin, and Bin), and the full set can then be loaded into the color drive LUT.

In other embodiments, the achromatic panel drive values and/or color panel drive values are generated (e.g., computed on the fly) in response to the input image pixels, in a manner other than being read from one or more LUTs, or uncorrected achromatic panel drive values and/or color panel drive values are read from one or more LUTs and corrected (e.g., on the fly, in a processing module).

In some embodiments, the controller is configured to generate the achromatic panel drive values and color panel drive values in response to input image data (e.g., from a media source) having a first (e.g., standardized) resolution and contrast. In other embodiments, the controller is configured generate the achromatic panel drive values and color panel drive values in response to input image data having resolution higher than the first resolution and/or contrast higher than the first contrast (e.g., High Definition video from a High Definition VDR), and the color LCD panel of the display may be configured to be capable of producing an image of the first (or higher) resolution.

The display may include a set of diffusers. For example, when the achromatic LCD panel is located upstream of the color LCD panel, the diffusers may include a relatively coarse diffuser configured to diffuse light from the backlight of the display, and a relatively fine diffuser (e.g., positioned between the achromatic LCD panel and the color LCD panel) configured to mask high frequency details or uncontrolled features in light modulated by the achromatic LCD panel.

In some embodiments, the backlight comprises one or more CCFLs, LEDs, and OLEDs. These may be directly illuminating or the light can be carried through a light pipe (e.g., in the case of an edge lit backlight configuration). In some embodiments, the backlight is an array of light sources comprising at least one of the following: white or broad spectrum light sources, RGB light sources, RGBW light sources, RGB plus one or more additional primary light sources, or other multi-primary light source color combinations. The array of light sources (e.g., edge-lit light sources) may be locally dimmed. In one embodiment, the light sources comprise different colors and each color's brightness is individually controllable.

Other aspects of the invention include a method for generating or providing color panel drive values (and optionally also achromatic panel drive values) in the manner in which they are generated or provided by any embodiment of the inventive display), a controller for a dual LCD panel display (configured to generate color panel drive values and achromatic panel drive values in accordance with any embodiment of the inventive method), a system for generating color panel drive values (and optionally also achromatic panel drive values) and optionally also storing the drive values in an LUT, and a computer readable medium (e.g., a disc) which stores code for implementing any embodiment of the inventive method. An embodiment of the inventive system (or controller) is or includes a general or special purpose processor programmed with software (or firmware) and/or otherwise configured to perform an embodiment of the inventive method. In some embodiments, the inventive method is implemented by an appropriately configured processor (e.g., an appropriately programmed general purpose computer, or networked computers), and the results may be displayed, and/or loaded into one or more LUTs, and/or employed to drive a dual LCD display. Any components of the present invention represented in a computer program, data sequences, and/or control signals may be embodied as an electronic signal broadcast (or transmitted) at any frequency in any medium including, but not limited to, wireless broadcasts, and transmissions over copper wire(s), fiber optic cable(s), and co-ax cable(s).

BRIEF DESCRIPTION OF THE DRAWINGS

Fig. 1 is a schematic diagram of a dual LCD display that can be controlled in accordance with an embodiment of the present invention.

Fig. 2 is a schematic diagram of another dual LCD display that can be controlled in accordance with an embodiment of the present invention.

Fig. 2A is a graph illustrating high frequency features and diffusion of light transmitted in a dual LCD display.

Fig. 3A is a drawing illustrating an arrangement of layers in a typical LCD panel.

Fig. 3B is a diagram of a portion of a dual LCD panel display, including an achromatic LCD panel, a color LCD panel, and a controller, showing an arrangement of layers in each of the LCD panels.

Fig. 4A is a block diagram of a controller for a dual LCD panel display, showing an architecture of the controller (an electronic device) that could be implemented in accordance with an embodiment of the present invention to generate drive signals for the display's color LCD panel and achromatic LCD panel (if module 410 is implemented in accordance with an embodiment of the present invention).

Fig. 4B is a block diagram of a dual LCD panel display, showing an architecture of a controller (an electronic device) that could be implemented in accordance with an embodiment of the present invention to generate drive signals for the display's color LCD panel (if module 462 is implemented in accordance with an embodiment of the present invention).

Fig. 4C is a block diagram of a controller for a dual LCD panel display, showing an architecture of the controller (an electronic device) that could be implemented in accordance with an embodiment of the present invention to generate drive signals for the display's color LCD panel and achromatic LCD panel (if module 474 is implemented in accordance with an embodiment of the present invention).

Fig. 4D is a block diagram of a dual LCD panel display, showing an architecture of a controller (an electronic device) that could be implemented in accordance with an embodiment of the present invention to generate drive signals for the display's color LCD panel (if module 474 is implemented in accordance with an embodiment of the present invention).

Fig. 5 is a block diagram of a controller that generates drive signals for a color LCD panel and an achromatic LCD panel of a dual LCD panel display (e.g., the LCD panels of the FIG. 1, 2, or 3B display) according to another embodiment of the present invention.

Fig. 5A is a block diagram of a controller that generates drive signals for a color LCD panel and an achromatic LCD panel of a dual LCD panel display (e.g., the LCD panels of the FIG. 1, 2, or 3B display) according to another embodiment of the present invention.

Fig. 6 is a diagram of elements of an embodiment of the inventive display, showing light intensities emitted from (or transmitted through) elements of the display and the spectral transmittance of individual elements.

Fig. 7 is a diagram illustrating the characteristics of the observed color shifts in chromaticities of the RGB color primaries and white point (for the color LCD panel of the Fig. 6 display) as a function of driving the achromatic LCD panel at various values.

## DESCRIPTION OF THE PREFERRED EMBODIMENTS

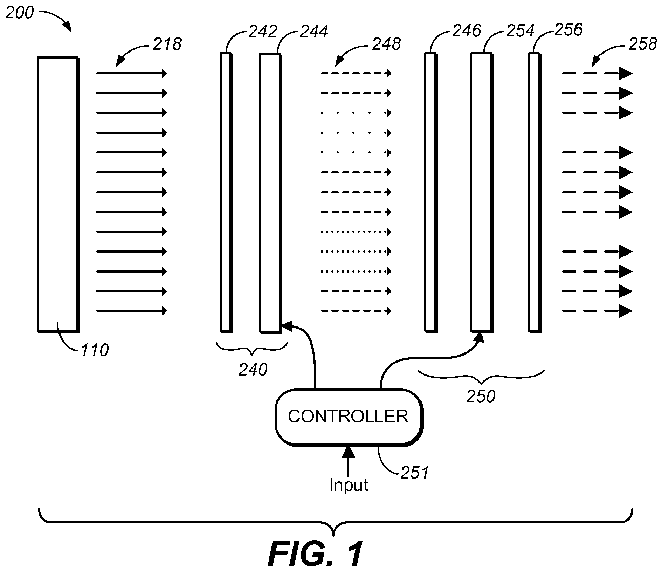

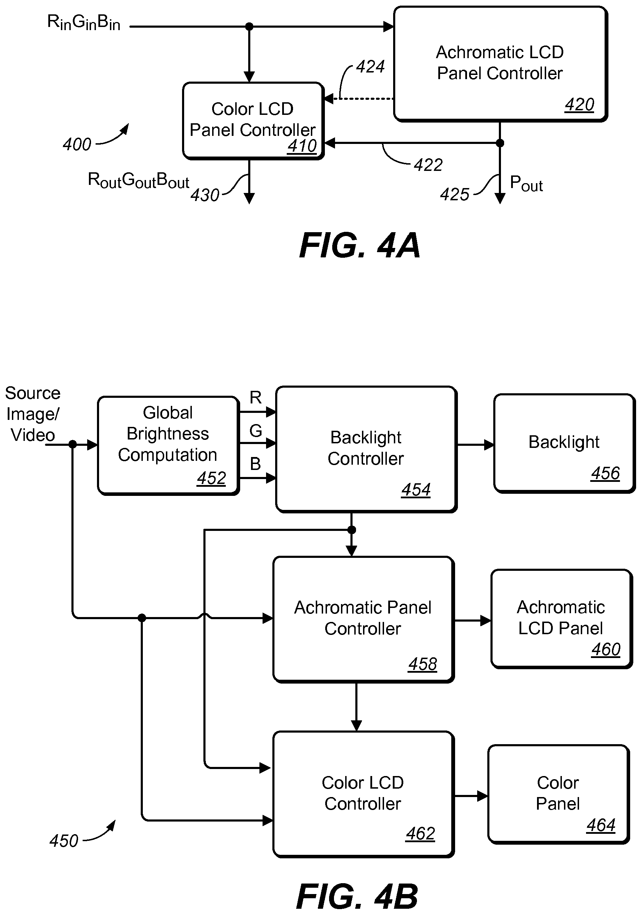

A variety of dual LCD panel displays can be controlled in accordance with embodiments of the inventive control method, including dual LCD panel display embodiments to be described with reference to FIGS. 1, 2, 3B, 4A, 4B, 4C, 4D, and 6. Exemplary embodiments of the inventive controller (for generating drive signals for a color LCD panel and an achromatic LCD panel of a dual LCD panel display) will be described with reference to FIGS. 4A, 4B, 4C, 4D, and 5-9.

High dynamic range dual LCD panel display 200 (of FIG. 1) includes a backlight 110 which may be a standard CCFL or other broadband lighting source (e.g., LEDs, OLEDs, etc.). Backlight 110 may be direct lit (it may comprise light source(s) that directly illuminate downstream panels 240 and 250) or edge lit (as is popular in many thin screen LCD display designs), and it may emit backlight that is constant, globally dimmed, or locally dimmed. The backlight can be white, of controllable luminance, or driven by a multi-primary source, for example, RGB LEDs.

Backlight 110 illuminates two downstream modulators: color LCD panel 250, and achromatic LCD panel 240 (placed upstream of panel 250). Backlight 210 illuminates achromatic LCD panel 240 with light 218. Achromatic panel 240 produces modulated light 248, which is a locally dimmed version of the backlight 218. Modulated light 248 is further modulated for color and brightness by color LCD panel 250, producing final image light 258. Controller 251 (which may be configured in accordance with the present invention) asserts drive signals to the active elements of panels 240 and 250 in response to input image data (e.g., input video).

As shown, achromatic panel 240 includes an initial polarizer 242, and an active elements panel 244 (typically, a layer of twisted nematic crystal ("TN") cells without color filters). Color panel 250 comprises: a polarizer 246 (e.g., an absorptive polarizer) which operates as both an initial polarizer for the color panel and as an analyzer for the active elements panel 244; a color active layer 254 (typically a layer of TN cells and a layer of color filters thereon) which modulates light transmitted through polarizer 246 as to polarization and color; and a passive polarizer 256 which effects the intensity modulation by polarization based filtering.

In the case of a constant backlight, the backlight 110 produces an initial light 218 which is constant or uniform. In other embodiments, the initial light 218 may be modulated (e.g., it may be spatially modulated light, pre-modulated light, globally dimmed light, individual RGB dimmed, temporally modulated light, or a combination of these types of light). The light 218 illuminates panel 240 (note that additional optical elements may be placed at virtually any point in the light/image chain, including any of diffusers, collimators, Brightness Enhancement Films (BEFs), Dual Brightness Enhancement Films (DBEFs), etc.). Other optical elements including reflectors may also be utilized (e.g., between backlight 110 and panel 240) depending on the display design.

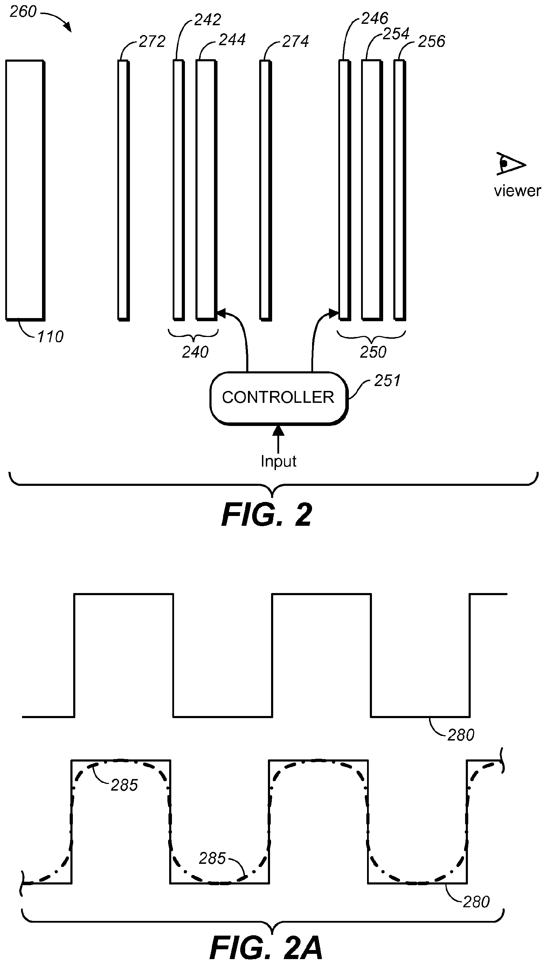

Fig. 2 is a schematic diagram of high dynamic range dual LCD panel display 260. The display 260 improves performance of the Fig. 1 display by the addition of appropriately designed diffusers: an upstream diffuser 272 and a mid-stream diffuser 274. All elements of Fig. 2 other than diffusers 272 and 274 are identical to the identically numbered elements of FIG. 1, and the description thereof will not be repeated with reference to Fig. 2. Upstream diffuser 272 is a "rough" diffuser that is designed to diffuse the backlight into an evenly distributed light source. In the case of locally dimmed backlight, upstream diffuser 272 is designed to cause the backlight to smoothly vary across pixels of the upstream modulator (achromatic panel 240).

Midstream diffuser 274 is specifically designed to smooth light emitted from achromatic panel 240. Preferably, midstream diffuser 274 operates to remove and smooth rough edges of the lights emitted from each pixel of panel 240. To do so, midstream diffuser 274 may have higher diffusion resolution (e.g., be capable of diffusing smaller features) than upstream diffuser 272 and be capable of maintaining the modulated resolution of light emitted from panel 240. For example, Fig. 2A provides graphs that illustrate an approximate resolution of modulated light 280 in an on-off pattern as might be emitted from achromatic panel 240. The midstream diffuser 274 operates to remove sharp edges and smooth the emitted light while preferably maintaining as much peak brightness and darkness as possible (e.g., to produce diffused light 285 as shown in FIG. 2A).

The diffused light transmitted from diffuser 274 to panel 250 has its sharp edges (e.g. higher frequencies) removed, and the diffusing is preferably sufficient to "break-up" or prevent the formation of moiré patterns that typically develop as artifacts in displays with various combinations of grid like panels and/or other optical elements. Diffused light 285 transmitted from mid-stream diffuser 274 is preferably at an entirely different level of diffusion compared to the diffused light transmitted from upstream diffuser 272. The upstream diffuser may, for example, cause the backlight to smoothly vary from one lighting element in the backlight to the next. In contrast, the mid-stream diffuser may, for example, provide smooth variances of lighting within a single pixel and mix light only from directly adjacent pixels. In one embodiment, the upstream and mid-stream diffusers differ in diffusion coarseness by, for example, an order of magnitude or more. In fact, best results may occur with an even much greater differential in resolution between the upstream and midstream diffusers.

In one implementation of FIG. 2, upstream diffuser 272 mixes and smoothes light from multiple light sources in the backlight while midstream diffuser 274 smoothes light from single pixels of achromatic panel 240. In another implementation, upstream diffuser 272 may be described as mixing light such that a single pixel of upstream diffuser 272 is illuminated by a plurality of light sources in the backlight, and mid-stream diffuser 274 may be described as mixing light from achromatic panel 240 on a sub-pixel level (light from individual pixels of the achromatic panel, which are sometimes referred to herein as "sub-pixels" as explained below). In one embodiment, the upstream diffuser is a rough diffuser compared to a relatively fine mid-stream diffuser. In one embodiment, the mid-stream diffuser provides diffusion at less than a sub-pixel resolution. In another embodiment, the mid-stream diffuser comprises a diffuser with a spatial transfer function that either cuts-off, removes, repositions, or eliminates high frequency elements of light that would otherwise be emitted. In another embodiment, the mid-stream diffuser may consist of a material that diffuses light more in one direction than in another to compensate for the non-squareness of the upstream pixels.

In another embodiment, mid-stream diffuser 274 preserves enough detail such that the resolution of the modulated light is not altered (e.g., resolution not altered, but higher frequency details are no longer present). The mid-stream diffuser may be designed to mask high frequency details in the light modulated by the achromatic panel. For example, the mid-stream diffuser may comprise an optical low-pass filter that passes the lowest four harmonics (e.g., in Fig. 2A, the four lowest harmonics of image 280 approximately reproduce image 285), or another set of lowest harmonics (e.g., the lowest 2, 3, 5, 6, 7, or 8 harmonics of the fundamental frequency). The mid-stream diffuser removes, for example, sub-pixel level features placed into the light stream by the achromatic panel. In most embodiments, the size of a pixel in the achromatic panel is smaller than the distance between the achromatic panel and the image-generating panel.

The coarseness of the mid-stream diffuser may, for example, be determined in part by a geometry of cells and surrounding areas of the achromatic panel. For example, if the achromatic panel comprises cells that are square with equivalent amounts of hardware (wires, cell walls, etc) on all sizes, then the coarseness of the midstream diffuser would generally be uniform in all directions. If the cells of the achromatic panel are rectangular then the coarseness of the midstream diffuser, assuming all other factors being equal, would be coarser in the direction corresponding to the longer side of the rectangle and finer in the direction corresponding to the shorter side of the rectangle.

The coarseness of the mid-stream diffuser may also be determined, for example, by a scale and/or physical or other measurable un-controlled features and/or imperfections in the cells of the achromatic panel. The coarseness is determined at a resolution that masks the uncontrollable features but still allows the resolution of the panel (in the form of modulated light) to pass mostly unaltered. For example, space between the cells of the achromatic panel may, for example, block light or pass some amount of un-modulated light. Blocked light or un-modulated light passed by the achromatic panel results in an uncontrolled or un controllable in the image being formed.

Other uncontrollable features may include, for example, differences in modulation in a cell not attributable to its energization level and/or non-uniformity within a cell - any of which may be due to, for example, manufacturing or component quality variances. In one embodiment, the coarseness of the mid-stream modulator is selected so that one or more of the uncontrollable features are at least one of removed, masked, or otherwise minimized through diffusion. In one embodiment, the uncontrollable features are different depending on a direction (e.g., horizontal and vertical), and each direction (at least two directions in a single diffuser) having different diffusion properties related to the different amounts of uncontrollable features found in those directions.

In the embodiments of FIGS. 1 and 2, polarizer 246 is used as both an analyzer for panel 240 and an initial orientation polarizer for downstream panel 250. Mid-stream diffuser 274 may be specially constructed to include polarization or to maintain existing polarization. In the case where mid-stream diffuser 274 maintains polarization (e.g., it does not substantially alter the polarization of light being diffused), then polarizer 246 operates as both the analyzer and initial orientation polarizer as described above. However, diffusers typically will impart more polarization alteration than is desirable and therefore the addition of a polarizer to diffusion element 274 may be desirable so that the light may be analyzed prior to diffusion and accompanying polarization changes. This additional polarizer could increase contrast at the expense of brightness.

The embodiments of Figs. 1 and 2 are typically constructed so that the modulators (achromatic panel 240 and image-generating panel 250) are in close proximity to each other, which, as one benefit, reduces parallax caused by a separation between the panels. The modulators may be sandwiched together either directly or separated by thin films, air gaps, or optical stack items such as diffusers, collimators or other optical elements that are relatively thin compared to glass and other layers of an LCD panel. Even with the close proximity of the panels, parallax may occur, particularly when difficult images or patterns are displayed and viewed at off-normal angles. The present inventors have realized that a specific configuration of panels brings the active layers of the achromatic panel and the image-generating panel closer together, further reducing parallax effects.

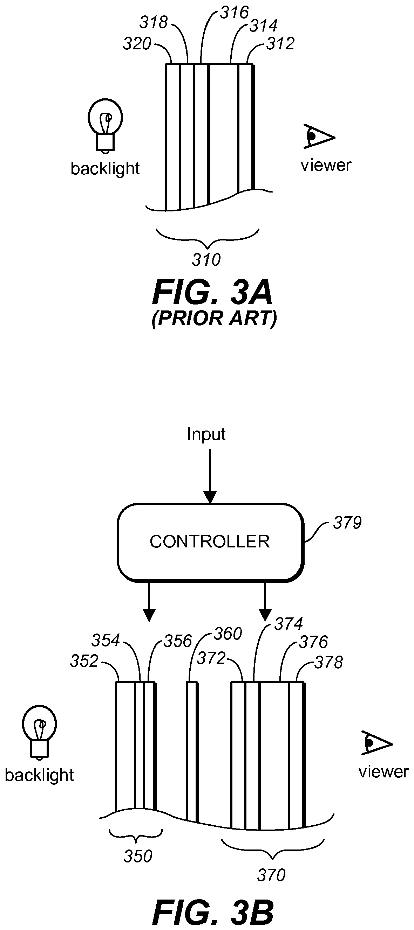

Construction of a typical conventional LCD panel 310 is illustrated in Fig. 3A. A first layer from the viewing side is a polarizing (analyzing) layer 312. Next, a relatively thick transparent substrate 314 (e.g., glass) is shown. Etched on the non-viewing side of the glass are, for example, wires and/or electronics for controlling a liquid crystal layer 316. Laminated together with the substrate and liquid crystal layer(s) is a color filter layer 318 and an initial polarizing layer 320. In operation, a backlight illuminates the panel 310, polarizing layer 320 sets an initial polarization, color filters 318 provide the primary colors Red, Green, and Blue, and liquid crystal layer 316 rotates polarization of each R, G, and B light by an amount that each light is to be attenuated. The analyzing layer then absorbs amounts of the R, G, and B lights based on their respective polarizations as imparted by the liquid crystal layer.

Fig. 3B is a diagram of a portion of a dual LCD panel display, including achromatic LCD panel 350, color LCD panel 370, and controller 379, showing an arrangement of layers in each of the LCD panels. The arrangement is specifically designed to place the active layer of achromatic LCD panel 350 as close as possible to the active layer of the color LCD panel 370. The layers of achromatic panel 350 (from the backlight side) comprise a transparent substrate 352, an initial polarization layer 354, and an active layer 356 (e.g., controllable polarizing layer). A polarizer 360 (which may be a separate component or laminated together with either achromatic panel 350 or color LCD panel 370) performs double duty as both an analyzing polarizer for the achromatic panel 350 and an initial polarizing layer for color LCD panel 370.

Continuing from the backlight side, the layers of color LCD panel 370 comprise color filter layer 372, active layer 374, substrate 376, and polarization (analyzing) layer 378. Other arrangements of the layers may be utilized, including, for example, placing the polarization (analyzing) layer 378 on the backlight side of the substrate 376. The polarization (analyzing) layer 378 may also be placed on the backlight side of the color filter layer 372 and the active layer 374 may be placed as the first layer on the backlight side of panel 370 (e.g., active layer - color filter layer - polarization (analyzing layer). Controller 379 (which may be configured in accordance with the present invention) asserts drive signals to the active elements of panels 350 and 370 in response to input image data (e.g., input video).

In some embodiments of the present invention, an achromatic panel and an image-generating panel are provided from similarly constructed LCD panels. The achromatic panel may, for example, be oriented backwards or upside down (flipped or inverted) relative to the LCD panel. This arrangement places the active layers of the achromatic panel and the image-generating panel closer together than would be in the case of similarly oriented panels of typical commercially available construction.

Fig. 4A is a block diagram of a controller for a dual LCD panel display, showing an architecture of the controller (an electronic device) that could be implemented in accordance with an embodiment of the present invention to generate drive signals for the display's color LCD panel and achromatic LCD panel (if module 410 is implemented in accordance with an embodiment of the present invention). The achromatic LCD panel is physically located upstream of the color LCD panel in typical embodiments of the display, but is located downstream of the color LCD panel in other embodiments of the display (drive signals for the panels can be generated in accordance with the invention regardless of the relative positions of the LCD panels). Controller 400 is an electronic system or device (e.g., electronic circuitry, software architecture, programmable device architecture, plug-in, etc., or combinations thereof) that generates drive signals for a color LCD panel and an achromatic LCD panel. An input signal (indicative of $R_{in}$, $G_{in}$, and $B_{in}$ values) is provided and/or extracted from an image or video source (e.g., DVD, Cable, Broadcast, Satellite, Streaming video, Internet, removable media, thumb drive, etc.) to color LCD panel control module 410 and achromatic panel control module 420. The achromatic panel control module generates a signal $P_{out}$ (identified by reference number 425) that is asserted to an achromatic LCD panel (which is typically located upstream of a corresponding color LCD panel in a dual LCD panel display). In essence,

the $P_{out}$ signal 425 indicates which pixels of the achromatic panel should be attenuated and the amount of attenuation (e.g., implemented by rotating the polarization of pixels to be attenuated by an amount proportional to the amount of desired attenuation for that pixel). The $P_{out}$ signal 425 may be, for example, a luminance value derived from the $R_{in}G_{in}B_{in}$ data.

Processing in color panel control module 410 may implement, for example, both a characterization and correction that produces a corrected response curve (e.g., correcting the input RGB values in response to a given luminance thereof) and a non-linear transfer function that increases or decreases local contrast (makes pixels of the color LCD panel darker or lighter). Processing in achromatic panel control module 420 may implement a correction that applies a transfer function (e.g., a non-linear transfer function) to luminance values determined from the input RGB values to increase or decrease local contrast (makes pixels of the achromatic LCD panel darker or lighter). The non-linear function may, for example, brighten or darken pixels in a manner that takes into account the relative brightness of neighboring pixels. As shown, $P_{out}$ is asserted to color panel control module 410, so that the output of module 410 is determined by both the input $R_{in}G_{in}B_{in}$ data and each achromatic panel drive value determined by the $P_{out}$ signal. Alternatively, intermediate data 424 (generated in module 420) may be exclusively or additionally forwarded to color panel control module 410. Intermediate data 424, may be, for example, partially processed data generated by performing one or more of the steps performed to produce $P_{out}$ (e.g., characterization without applying the non-linear function). In response to the $R_{in}G_{in}B_{in}$ data, color panel control module 410 generates an $R_{out}G_{out}B_{out}$ drive signal 430 that is asserted to a color LCD panel of the display (e.g., a 1920 × 1080 pixel panel) to drive the pixels of the color LCD panel.

Fig. 4B is a block diagram of a dual LCD panel display, showing an architecture of controller 450 (e.g., electronic circuitry, software architecture, programmable device architecture, plug-in, etc., or combinations thereof) that could be implemented in accordance with an embodiment of the present invention to generate drive signals for the display's color LCD panel 460 (if module 462 is implemented in accordance with an embodiment of the present invention). Controller 450 is implemented as an electronic device 450 (e.g., a programmed processor) that generates drive signals for backlight 456, achromatic LCD panel 460, and color LCD panel 464. A source image/video signal indicative of $R_{in}G_{in}B_{in}$ input pixel values is provided and/or extracted from an image or video source (e.g., DVD, Cable, Broadcast, Satellite, Streaming video, Internet, removable media, thumb drive, etc.) to global brightness computation module 452, which separates the light into R, G, and B primary color components and provides these components to backlight controller 454. In response, controller 454 generates a backlight control signal for driving backlight unit 456. The backlight control signal may determine a backlight drive value for each primary color component of each pixel of a backlight array, or a single backlight drive value for a backlight.

In one embodiment, in the case of a locally dimmable implementation of backlight unit 456 (e.g., a backlight that includes locally dimmed (or dimmable) light sources), the backlight unit 456 may generate a spatially modulated backlight that illuminates downstream achromatic and color LCD panels 460 and 464 according to relative brightness in areas of each input image. The relative brightness may be computed, for example, based on the relative intensities of each primary color in a corresponding backlight pixel. Production of the spatially modulated backlight may also include, for example, consideration of the brightness of neighboring or nearby backlight pixels, and/or, in the case of video, brightness of pixels in preceding and/or subsequent image frames.

Achromatic LCD panel controller 458 receives the input video/image signal and optionally also the backlight control signal, and generates an achromatic panel control (drive) signal in response thereto. The achromatic panel control signal specifies an amount of dimming produced by each pixel of achromatic panel 460. Achromatic panel 460 may be of higher (or lower, or equal) resolution than color LCD panel 464.

In one embodiment, image-generating (color LCD) panel 464 is downstream from achromatic panel 460 and the latter panel (typically of higher resolution than is panel 464) is utilized to produce an illumination profile that is intentionally blurred (blurred using the higher resolution capabilities of the achromatic panel as opposed to blurred because the achromatic panel is of lower resolution). The intentionally blurred image is blurred using the higher resolution capabilities of the display separate and apart from any blurring that occurs among or due to mixing of the backlights due to point spread functions or other qualities/orientations of the backlight or individual lights in the backlight. Although the aforementioned blurring is separate and apart from backlight blurring or mixing, embodiments of the invention may nonetheless include amounts of mixing or blurring of individual elements of the backlight.

Color LCD panel controller 462 receives the achromatic panel control signal, the image/video signal, and optionally also the backlight control signal, and generates a color LCD panel control signal (for driving each pixel of color LCD panel 464) in response thereto.

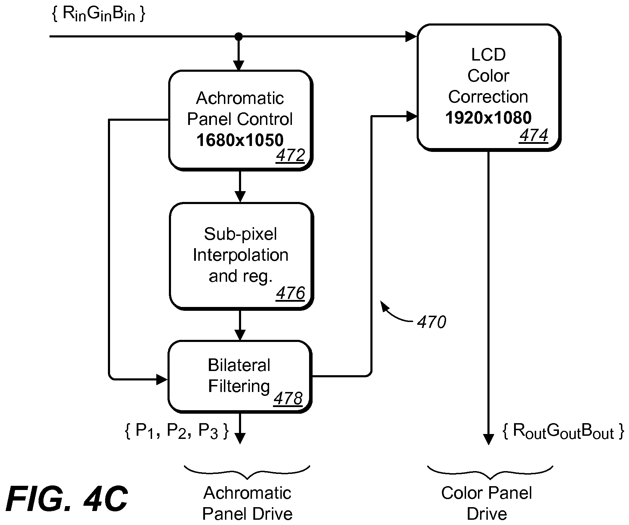

Fig. 4C is a block diagram of a controller (470) for a dual LCD panel display, showing an architecture of the controller (an electronic device) that could be implemented in accordance with an embodiment of the present invention to generate drive signals for the display's color LCD panel and achromatic LCD panel (if module 474 is implemented in accordance with an embodiment of the present invention), in response to an input signal (a sequence of input values $R_{in}$, $G_{in}$, and $B_{in}$) provided to achromatic panel control module 472 and LCD color correction module 474. LCD color correction module 474 may be configured to correct and produce an output (color LCD panel drive values $R_{out}$, $G_{out}$,

and B$_{out}$) for driving an 1920×1080 LCD array of RGB pixels. Achromatic panel control module 472 (with modules 476 and 478) may be configured to generate drive values for controlling an achromatic LCD panel having a lower resolution, for example, an 1680×1050 LCD array. Achromatic panel control module 472 (with modules 476 and 478) may be configured to generate drive values for controlling an achromatic LCD panel having 1920×1080 pixel resolution.

Achromatic panel control module 472 outputs a set of drive values P1', P2', and P3' (useful for driving the three LCD cells of a pixel of an achromatic LCD panel having the same resolution as the color LCD panel) in response to each trio of input values Rin, Gin, and Bin, and asserts them to each of sub-pixel Interpolation and Registration module 476 and filtering module 478. Since the actual achromatic LCD panel typically has higher resolution than the color LCD panel, module 476 performs interpolation on the values P1', P2', and P3', to generate a set of interpolated drive values for each pixel of the achromatic LCD panel (each pixel of the achromatic panel, driven by a set of three of the interpolated drive values, will be referred to as a "sub-pixel" since it is smaller than the larger pixels of the color LCD panel). Operation of interpolation and registration module 476 preferably allows the controller to drive different achromatic panels with different control resolutions and sizes. Filter module 478 performs spatial and range filtering on the interpolated drive values (from module 476) to smooth the monochromatic image produced by the driven achromatic panel, to achieve better viewing angle performance while maintaining edges and preserving the high frequency details in the image, and to enhance local contrast. The filtering in module 478 may diffuse the drive to the achromatic LCD panel to improve off-angle viewing.

The output of module 478 is a sequence of sets of achromatic panel drive values P1, P2, and P3 (each set of values P1, P2, and P3 generated in response to a set of three interpolated drive values from module 476) for driving the three cells of each pixel of the achromatic panel. The achromatic panel drive values P1, P2, and P3 are also asserted to module 474 for generation of color LCD panel drive values R$_{out}$, G$_{out}$, and B$_{out}$ in response thereto.

The color LCD panel control signal output from module 474 is a sequence of sets of color panel drive values R$_{out}$, G$_{out}$, and B$_{out}$ (each set of values R$_{out}$, G$_{out}$, and B$_{out}$ generated in response to a set of three input values R$_{in}$, G$_{in}$, and B$_{in}$) for driving the cells of each pixel of the color LCD panel.

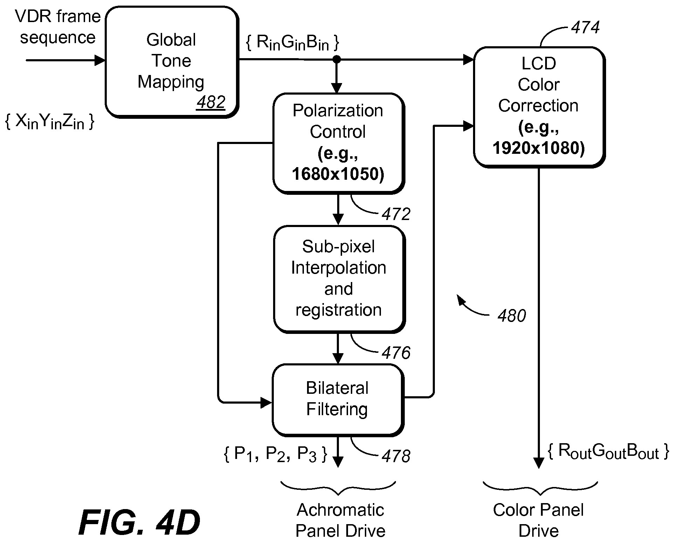

Fig. 4D is an architecture of another controller for generating drive signals for the achromatic LCD panel and color LCD panel of an embodiment of the inventive display, in response to an input signal (a sequence of input values R$_{in}$, G$_{in}$, and B$_{in}$) provided to the achromatic panel control module and LCD color correction module of Fig. 4D. The architecture of Fig. 4D is identical to that of Fig. 4C, except as described below. The description of aspects of Fig. 4C that are identical to corresponding aspects of Fig. 4D will not be repeated with reference to Fig. 4D.

The FIG. 4D architecture provides a framework for utilization of a High Dynamic Range (HDR) input signal, e.g., an HDR signal indicative of an image or images (e.g., video or still frame sequence of .hdr format images that encode pixel values in terms of XYZ tristimulus values represented in cd/m2) having a dynamic range that is equivalent to the dynamic range of the human visual system (HVS) on average. Since, on average, the HVS has greater dynamic range than most displays, a tone mapping algorithm (implemented by Global Tone Mapping Module 482 of FIG. 4D) is applied to transform the luminance range of the image(s) indicated by the input signal so that they are within luminance range of the display system. An HDR frame sequence, each pixel of which is defined by a trio of tristimulus primary values {X$_{in}$ Y$_{in}$ Z$_{in}$}, is provided to Global Tone Mapping Module 482 of FIG. 4D. Module 482 transforms each trio of X$_{in}$ Y$_{in}$ Z$_{in}$ values into RGB values in a RGB color space, and asserts the resulting RGB signal to the achromatic panel control module and LCD color correction module of Fig. 4D (which are identical to the corresponding achromatic panel control module 472 and LCD color correction module 474 of Fig. 4C. In response to this RGB signal, the elements of the FIG. 4D system (other than module 482) operate as does the FIG. 4C system.

We next describe additional details of methods for driving the achromatic LCD panel and image-generating (color) LCD panel of embodiments of the inventive display. The display architecture including an achromatic LCD panel and a color LCD panel (e.g., of similar construction) allows performance of local dimming in a sub-pixel (or higher resolution) fashion. One of the modulators can have a different or identical resolution than the other in either dimension.

Pixels of the achromatic LCD panel can be driven based on the luminance of a corresponding (or related) input pixel. Accurate characterization of the achromatic LCD panel's output luminance response can be used to map input RGB pixel values to specific drive levels.

Drive values for the achromatic panel in response to a set of input image values R$_{in}$, G$_{in}$, and B$_{in}$ may be generated in accordance with a function of the luminance response of the combined dual modulation system in response to linear variation of the achromatic panel's control with the color LCD panel drive set to full white (maximum drive signal codewords) and a nonlinear transfer function representing the skew of the codewords with the luminance representing the nonlinear nature of the drive. This function could be used to improve the local contrast of the display using a nonlinear input-output relationship making dark regions darker and bright regions brighter. The drive computation can be used to calculate the drive for each of the pixels of the achromatic panel, or for each of the cells of each pixel of the achromatic panel. Each pixel of the achromatic LCD panel may comprise three cells, driven by the same or different achromatic panel drive values, e.g., in the case that the achromatic LCD panel has a similar construction and orientation to the color LCD panel except that the cells of the achromatic LCD panel are not color-filtered as are the cells of each pixel of the color LCD panel.

The interaction between the image-generating (color LCD) panel and the achromatic panel can be represented as a color correction function. This function may be determined by characterization of (i.e., measuring) the color primaries of the image-generating panel when illuminated by light from the achromatic panel in response to a set of achromatic panel drive values (generated in response to a set of input color values), and determining a correction function to achieve a desired color (rather than the actually measured color) in response to the set of input color values. The color LCD panel can then be driven by the corrected drive values (determined in response to a set of input color values, e.g., using a look-up table) while the achromatic panel is driven by a set of achromatic panel drive values (generated in response to the same set of input color values, e.g., using another look-up table), to cause display of desired color (by the dual LCD panel display) in response to the input color values.

The resulting RGB drive for the color LCD panel may be, for example, of the following form (where $R_{out}$, $G_{out}$, and $B_{out}$ are drive values for the three cells of one pixel of the color LCD panel):

$$R_{out} = f_3(R_{in}, f_4(R_{in}, Y_{out})),$$

and

$$G_{out} = f_5(G_{in}, f_6(G_{in}, Y_{out})),$$

and

$$B_{out} = f_7(B_{in}, f_8(B_{in}, Y_{out})),$$

where $f_4$, $f_6$ and $f_8$ are characterization functions each defining an output primary for a set of input pixel values and a computed $Y_{out}$ value (where $Y_{out}$ is a luminance determined from the set of input primary pixel values), and each of $f_3$, $f_5$ and $f_7$ is a nonlinear combination function of an input primary and the output primary determined by one of the characterization functions.

Sub-pixel control of the achromatic LCD panel (e.g., where the pixels of the achromatic LCD panel, referred to as "sub-pixels," are smaller than pixels of the color LCD panel) can be used to smooth out any parallax errors that are incurred by use of the achromatic LCD panel. Since sub-pixel control increases the effective resolution of the achromatic panel, it can cause smoothing/dithering operations to be more refined and accurate. This can be implemented using a smoothing mask on the drive image to the achromatic panel, such as, for example:

$$[\text{smoothed drive}_{\text{achromatic panel}}]_{(i,j)} = f_{\text{int R}}([\text{drive}_{\text{achromatic panel}}]_{(i,j)})$$

where $f_{\text{int R}}$ is a smoothing operator applied on a spatial radius of R sub-pixels of the achromatic panel. In a construction with four pixels (referred to as sub-pixels) of the achromatic panel corresponding to every pixel on the color LCD panel, the applied quad design would increase the resolution of the achromatic panel to twice that of the image-generating (color LCD) panel along both the width and the height directions.

In an embodiment, a source image may be processed through a nonlinear function to modulate the achromatic panel. This can create a perceived effect of contrast stretching. Existing tone mapping algorithms rely exclusively on software algorithms to stretch contrast.

Some embodiments of the invention use RGB individually controlled tristimulus-based backlights (e.g., LEDs, arranged in an edge lit configuration, direct lit array, or other arrangement). By scaling the current drives to the RGB individually controlled tristimulus LED backlight, the 3D surface of the luminance versus chromaticity of colors that represented may be adjusted. Luminance control is primarily from the dimming plane and the combination of the LED backlight and the dimming plane, scaling the color drives to the LEDs allows for wider color gamut at higher luminance values. For a target display luminance, the luminance vs current characterization curves may be used to determine/create the right scaling parameters for a current drive designed for better control of color gamut at that target luminance. This forms a basis for a global backlight controller embodiment.

The global backlight controller embodiment can be used, for example, on a plurality of LEDs which are closely spaced to create an edge lit zonal dimming backlight on conjunction with the color LCD and the dimming plane. By working on a plurality of LEDs at a time, the global backlight controller embodiment can also be used for correcting drifts in the output wavelength of light from a zone with luminance and maintain more accurate color properties at higher wavelengths.

Some embodiments of the invention include computation of a color primary rotation matrix from a sparse measured data set. Given a sparse set of tristimulus primaries (R, G, B) as input images to the display system, a color rotation matrix (e.g., an optimum color rotation matrix) is determined for converting each trio of input RGB values in the sparse set to a corresponding set of drive values (XYZ) for the color LCD panel of the display. The matrix could be predetermined, then implemented as a look-up table (LUT), and then used during a display drive value operation to generate a set of drive values for the color LCD panel of a display in response to a set of input RGB values (and achromatic panel drive values determined from the input RGB values). For example, the operation of reading (from the LUT) a set of drive values for the color LCD panel in response to a set of input RGB values (and achromatic panel drive values determined therefrom) could be equivalent to multiplication (of the inputs to the LUT) by the rotation matrix.

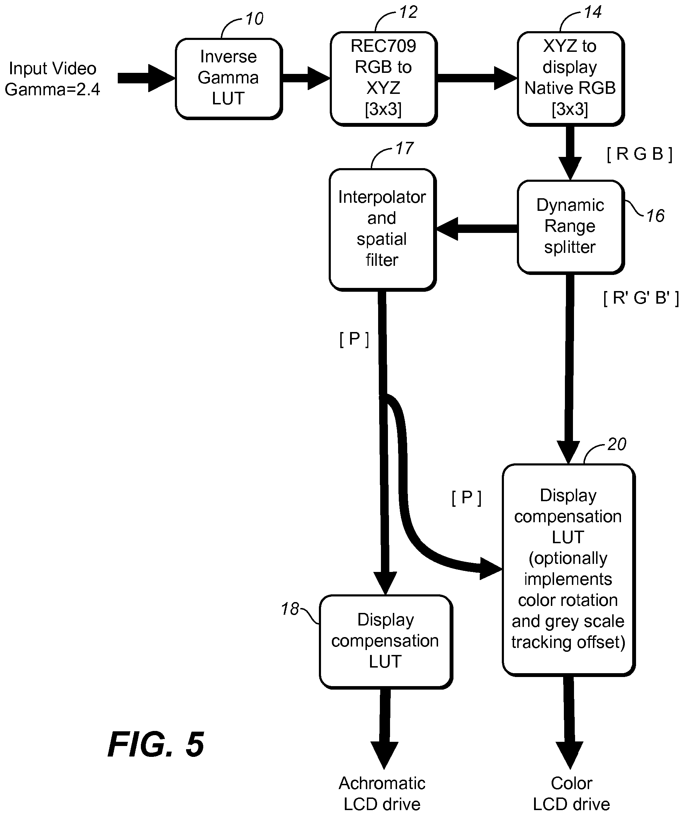

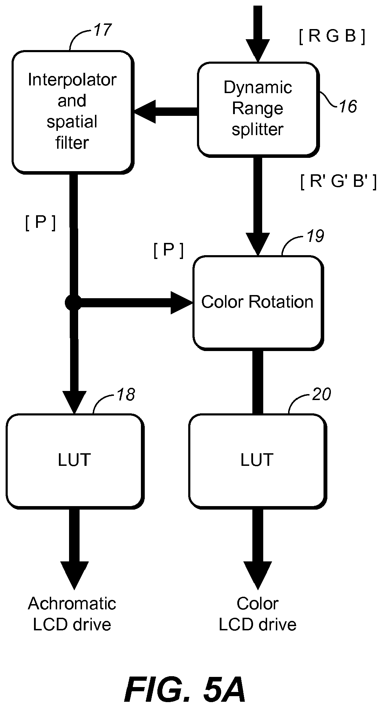

The computed color rotation matrix could be implemented by module 474 of FIG. 4C or 4D, or by controller module 410 of FIG. 4A, or by controller module 462 of FIG. 4B, or by LUT 20 of FIG. 5, to be described below, and is preferably optimized for minimum least square color distortion in the output color space given the number of sample data points that have been measured to determine the matrix. Given more uniformly spaced data points, the computed color rotation matrix would be a more accurate representation of the true rotation operation by the display.

The color rotation matrix may be determined as a result of preliminary measurements on the display in which the display is backlit (e.g., with a constant, known backlight) and driven by a sparse set of input color value trios ($R_{in}$, $G_{in}$, and $B_{in}$), and a trio of achromatic panel drive values (P1, P2, and P3) determined from each trio of input color values, and the actual color emitted by the display in response to each trio of input color values ($R_{in}$, $G_{in}$, $B_{in}$) and the corresponding set of achromatic panel drive values (P1, P2, P3) is measured and compared to a target (desired) set of colors in response to said set of input color values and corresponding achromatic panel drive value set. As a result of the measurements, the color rotation matrix can be determined to be a matrix which, when matrix-multiplied with a vector whose coefficients are an input color value trio ($R_{in}$, $G_{in}$, and $B_{in}$) and a corresponding trio of achromatic panel drive values (P1, P2, and P3), will determine corrected color LCD panel drive values ($R_{out}$, $G_{out}$, and $B_{out}$) and achromatic panel drive values (P1, P2, and P3) which will drive the display to display the target color determined by the input color value trio ($R_{in}$, $G_{in}$, and $B_{in}$).

A set of color panel drive values ($R_{out}$, $G_{out}$, and $B_{out}$) determined by the color rotation matrix in response to each of a full set of input color value trios ($R_{in}$, $G_{in}$, and $B_{in}$) and trio of achromatic panel drive values (P1, P2, and P3) determined by each input color value trio, can be stored in a color drive LUT. The color drive LUT could be implemented in module 474 of FIG. 4C or 4D, or by controller module 410 of FIG. 4A, or by controller module 462 of FIG. 4B, or by LUT 20 of FIG. 5. To produce the color drive LUT, a sparse set of the corrected color panel drive values could be determined (from a sparse set of input image color value trios and corresponding achromatic panel drive value trios) and then interpolation could be performed thereon to generate a full set of corrected color panel drive values (e.g., including a trio of output color panel drive values, $R_{out}$, $G_{out}$, and $B_{out}$, for each possible set of input color values Rin, Gin, and Bin), and the full set could then be loaded into the color drive LUT.

In other embodiments of the inventive display, color panel drive values are generated or provided (e.g., computed on the fly by matrix multiplication) in response to the input image pixels, in a manner other than being read from a color drive LUT.

Fig. 5 is a block diagram of a controller that generates drive signals for a color LCD panel and an achromatic LCD panel of a dual LCD panel display (e.g., the LCD panels of the FIG. 1, 2, or 3B display) according to another embodiment of the present invention.

The Fig. 5 embodiment of the inventive controller is preferably implemented to generate drive values for the achromatic LCD panel and color LCD panel of a dual LCD panel display in response to input image pixels (each input image pixel determined by a trio of color values $R_{in}$, $G_{in}$, and $B_{in}$), in accordance with a modular forward model (to be described below), assuming that the achromatic LCD panel and color LCD panel have the same resolution and size (so that each pixel of the achromatic panel is aligned with a pixel of the color panel. The Fig. 5 controller performs operations (and the forward model assumes that operations are performed) on a per pixel basis, and generates a single achromatic drive value (P1 = P2 = P3 = P) for each pixel of the achromatic LCD panel, so that (where each pixel of the achromatic LCD panel comprises three cells) each cell of the achromatic LCD panel's pixel is driven by the same achromatic drive signal (P1 = P2 = P3 = P). The preferred method performed by the Fig. 5 controller to generate drive values for the achromatic LCD panel and color LCD panel is sometimes referred to as the "4Deep" algorithm, with "4Deep" referring to the four drive values needed to drive each pixel of the dual LCD panel display's color LCD panel (the three color components of the pixel are modulated in response to three color panel drive values or signals, $R_{out}$, $G_{out}$, and $B_{out}$) and the achromatic LCD panel pixel that is aligned therewith (a fourth drive value or signal, P, is employed to modulate this achromatic panel pixel). The 4Deep algorithm performs the same operations on the all the pixels in the input image. This makes it well suited for GPU based massively parallel computing architectures.

The fundamental problem solved by the 4Deep algorithm is: for a given input video signal (an RGB signal indicative of Red, Green, and Blue values for each pixel of each image (frame) to be displayed), what is the optimal set of drives to the achromatic LCD panel and color LCD panel of the display for accurate reproduction of motion imagery?

In accordance with the algorithm, the input video signal is indicative of pixels in the display's native [RGB] color space. Thus, when implemented by the FIG. 5 system, the input signal to dynamic range splitter module 16 is a sequence of pixels (each determined by a trio of color values $R_{in}$, $G_{in}$, and $B_{in}$) in the display's native color space.

Preliminary processing is performed on the input image signal in elements 10, 12, and 14 of the Fig. 5 system. Each of elements 10, 12, and 14 is implemented as a look-up table (LUT). In variations on the Fig. 5 system, elements 10, 12, and 14 (or elements 12 and 14) are omitted and the input image signal is asserted directly to the input of module 16 (or where LUT 10 is present, the output of LUT 10 is asserted directly to the input of module 16).

In the case that the input image pixels determined by the input image signal are gamma-encoded (e.g., the input image has gamma equal to 2.4), inverse gamma LUT 10 of FIG. 5 is used to transform the color components of the input image pixels to standard Rec. 709 RGB data. Such inverse gamma correction is typically necessary when elements 12, 14, 16, 18, and 20 of the FIG. 5 system are implemented to require linear RGB input values (gamma correction transforms linear values to nonlinear values, e.g., to correct for nonlinearities in CRT monitors that will be used to display them, and inverse gamma correction transforms such nonlinear values to linear values).

The linear Rec. 709 RGB color values output from LUT 10 are converted to normalized, linear CIE XYZ values (where Y denotes luminance) in LUT 12. LUT 12 effectively implements a standard $3 \times 3$ matrix transform ($3 \times 3$ matrix multiplication) on each trio of Rec. 709 RGB color values asserted thereto.

The CIE XYZ color values output from LUT 12 are converted to RGB values in the display's native color space in LUT 14. LUT 14 effectively implements a standard $3 \times 3$ matrix transform ($3 \times 3$ matrix multiplication) on each trio of CIE XYZ values asserted thereto.

The two transformations from (linear) Rec. 709 RGB into XYZ space (in LUT 12) and then from XYZ into (linear) native RGB color space (in LUT 14) can be combined into a single transformation to avoid the need for two LUTs. Doing so would allow LUTs 12 and 14 to be replaced by a single LUT implementing a $3 \times 3$ matrix transform. In implementation this would be preferred as it reduces complexity.

An advantage of the FIG. 5 design (with separate LUTs 12 and 14) is that it allows a display driven by the Fig. 5 controller to be tested to verify the accuracy of the display, by computing target CIE XYZ values generated from input pixels (in LUT 12), and comparing the target XYZ values directly against the display's output by measuring CIE XYZ values of the displayed light in the front of the display screen with a colorimeter. As the chromaticities of the display's native RGB primaries may be different than those for standard Rec. 709 RGB color space, the linear transformations by LUTs 12 and 14 (or a single LUT combining their transforms) will generally be necessary. However if the display's native RGB primaries are the same as Rec. 709 RGB primaries, the linear transformations would be unnecessary.

The input signal (in the display's native RGB color space) is indicative of a sequence of RGB values, including one red (R) value, one green (G) value, and one blue (B) value for each pixel of the display (i.e., each pixel of the color LCD panel and a pixel of the achromatic LCD panel that is aligned therewith)

In Dynamic Range Splitter module 16 of Fig. 5, in response to each trio of RGB values (of the sequence of RGB values indicated by the input signal), a luminance value P' is generated as the square root of the maximum of the R, G, and B values. Drive signals for corresponding pixels of the achromatic LCD panel are generated (in elements 17 and 18) in response to the luminance values P' generated in module 16. Dynamic Range Splitter module 16 also normalizes each of the R, G, and B values in put thereto by dividing it by the P' value to generate normalized values R' = R/P', G' = G/P', and B' = B/P' (thereby using the full dynamic range of the RGB signal space to create the R', G', and B' values).

The resulting R', G', and B' values, and interpolated, filtered luminance values generated (in module 17) in response to the P' values, are run through look up tables (LUTs) 18 and 20 to map them to achromatic panel and color panel drive values to generate the desired light output. Specifically, display compensation LUT 18 outputs achromatic panel drive value $P_D$ in response to each interpolated, filtered luminance value from module 17, and display compensation LUT 20 outputs a trio of color panel drive values $R_D$, $G_D$, and $B_D$ (for one pixel of the color LCD panel) in response to each trio of R', G', and B' values from module 16. The $P_D$ signal is replicated for all three sets of cells of the achromatic LCD panel (i.e., each $P_D$ value drives all three cells of the relevant pixel of the achromatic LCD panel).

The values stored in LUTs 18 and 20 are typically generated by characterizing the color and luminance response of the display. A typical characterization process includes steps of running the display through a sequence of inputs that vary in color and intensity. The output of the display is measured for each of these inputs (e.g., using a spectro-radiometer) and the measured values are interpolated (to estimate output values in response to other inputs) and the resulting values are processed (e.g., in a manner to be described below) to generate the full set of values that is stored in LUT 18 and the full set of values that is stored in LUT 20.

Since the achromatic LCD panel typically has higher resolution than the color LCD panel, interpolator and spatial filter module 17 interpolates the luminance values P' output from module 16 to generate a set of interpolated luminance values for each pixel of the achromatic LCD panel (each pixel of the achromatic LCD panel, driven by one of the interpolated luminance values or an achromatic panel drive value determined therefrom, may be referred to as a "sub-pixel" since it is smaller than the larger pixels of the color LCD panel, as noted above with reference to the Fig. 4C embodiment). The interpolation performed in module 17 preferably allows the controller to drive different achromatic LCD panels with different control resolutions and sizes.

Interpolator and spatial filter module 17 also implements spatial filtering (on the interpolated luminance values generated in module 17) to diffuse the drive to the achromatic LCD panel to improve the off-angle viewing of the display, as there is no need for perfect, one-to-one alignment between the achromatic and color LCD pixels. The spatial filtering can smooth the energization of the achromatic LCD panel to achieve better viewing angle performance while maintaining edges and preserving the high frequency details in the displayed image. Module 17 may implement "bilateral" spatial filtering in the sense that the filtering spreads an interpolated luminance value P (at one pixel of the achromatic panel) over a radially symmetric set of pixels around the pixel (e.g., with a Gaussian function). The spread for a low intensity input P is typically wider/broader (slower to decay) than the spread for a high intensity input P.

LUT 20 implements dynamic color rotation to account (compensate) for variations in the color of light transmitted by the achromatic LCD panel (to the color LCD panel) based on the drive conditions of the achromatic LCD panel (assuming the achromatic LCD panel is positioned between the backlight and the color LCD panel) to improve accuracy of color reproduction of the display. The dynamic color rotation compensate for variations in the color of light transmitted by the achromatic LCD panel in response to input image pixels having different luminance values (the luminance values of the input image pixels determine the drive conditions of the achromatic LCD panel). The dynamic color rotation is "interpolated" color rotation in the sense that the values stored in LUT 20 determine first color panel drive values for input image pixels having a minimum luminance, second color panel drive values for input image pixels having a maximum luminance, and color panel drive values (that are determined by interpolation from the first or second color panel drive values) for input image pixels having luminance between the minimum luminance and maximum luminance (as will be apparent from the following description of the forward model).

In variations on the Fig. 5 embodiment, LUT 20 stores color panel drive values for input image pixels having a first luminance (e.g., the minimum luminance or the maximum luminance), and a processing module is employed to correct each value output from module 16 (or each value output from LUT 20) on the fly. The correction should ensure that the color panel drive values resulting from the uncorrected input to the processing module are corrected (color rotated) by amounts determined (using interpolation) by the difference between the actual luminance of the relevant input image pixel and the first luminance. The processing module should implement the same dynamic color correction (e.g., interpolated color rotation) that is implemented by LUT 20 of FIG. 5.

The Fig. 5A controller is an example of such a variation on the Fig. 5 embodiment. In Fig. 5A, elements 16, 17, and 18 are identical to the identically numbered elements of FIG. 5, and the description of them will not be repeated. LUT 20 of FIG.5A stores color panel drive values for input image pixels having a first luminance (e.g., a minimum luminance), and processing module 19 is configured to perform color rotation on each trio of normalized values R' = R/P', G' = G/P', and B' = B/P' output from module 16 on the fly. The color rotation is performed, in response to the current luminance value P being asserted (to module 19) from the output of element 17, to replace each trio of uncorrected input values (from module 16) by a color rotated (corrected) trio of RGB values. In response to the color rotated trio of RGB values, LUT 20 of Fig. 5A outputs the same color panel drive values as LUT 20 of Fig. 5 would output in response to the trio of uncorrected input values. The color rotation performed by module 19 may be determined by the forward model of any of equations 4, 6, 7, and 8 (discussed below).

Implementations of the FIG. 5 and 5A controllers which perform dynamic interpolated color rotation as described, are examples of a class of embodiments of the inventive controller in which the controller is configured to determine an achromatic panel drive value set and a color panel drive value set in response to each input image pixel of a sequence of input image pixels, and the controller is configured to perform interpolated color rotation to generate data determining the color panel drive value set, in response to said each input image pixel and at least one value determining the achromatic panel drive value set for said each input image pixel (e.g., a luminance value output from module 17 of FIG. 5 or 5A), including by determining first color panel drive values for input image pixels having a first luminance, and generating corrected color components by color rotating color components of said each input image pixel by amounts determined by the difference between the actual luminance of said each input image pixel and the first luminance, and determining the color panel drive value set for said each input image pixel from the corrected input color components and the first color panel drive values.

LUT 20 of FIG. 5 (or module 19 of Fig. 5A) is optionally implemented so that the dynamic color rotation performed thereby accounts also for minor color variations of the optical stack to a first order linear approximation as defined by the forward model described below, and optionally also so that it accounts for nonlinearity in the optical multiplication of the achromatic LCD panel and the color LCD panel (e.g., grey-scale tracking offset) to a second order approximation defined by the forward model.

The controller of Fig. 5 (or Fig. 5A) performs the same operations on all the pixels in each input image. This makes it well suited for implementation with GPU based massively parallel computing architectures. The dynamic color correction performed by the controller of Fig. 5 or Fig. 5A (or by typical implementations of any of the noted variations on the Fig. 5 controller in which LUT 20 stores color panel drive values for input image pixels having a minimum luminance, and a processing module is employed to correct each value output from module 16 or each value output from LUT 20 on the fly) has low memory requirements and processing speed and complexity requirements. Typical implementations would require few operations (multiplication, division, square root, or table look up operations) per pixel.

We next describe forward light models of a dual LCD display, which capture key colorimetric characteristics of such a display, and enable pixel-level algorithms for colorimetric control of configurations of such a display (in accordance with embodiments of the invention).

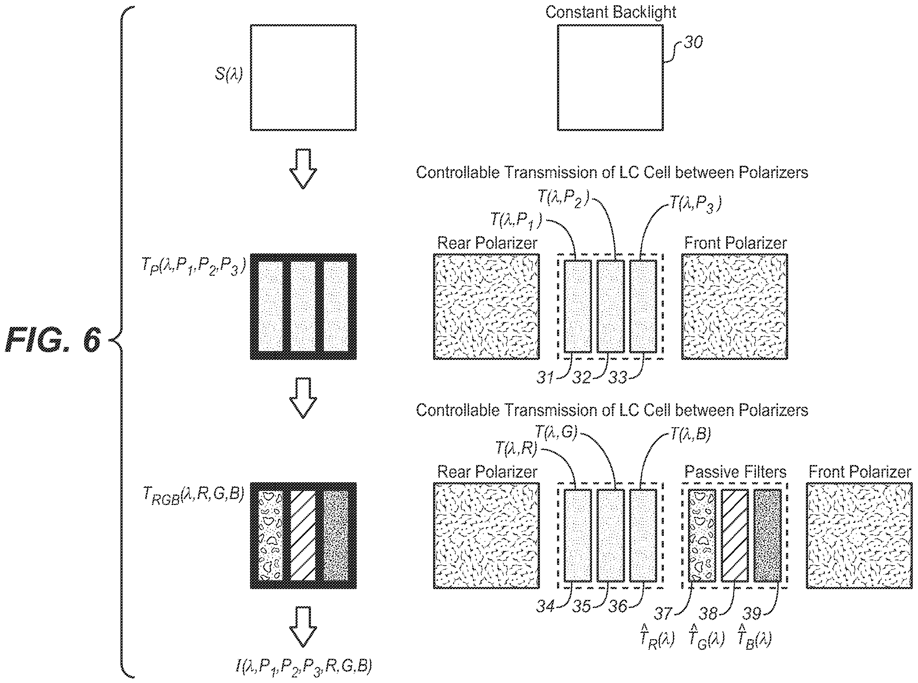

The models assume a dual LCD display of the type shown in Fig. 6. Fig. 6 is a diagram of elements of an embodiment of a dual LCD display including a backlight (30), an achromatic LCD panel positioned to be illuminated by backlight 30, and a color LCD panel positioned to transmit light emitted from the achromatic LCD panel. The achromatic LCD panel comprises a rear polarizer, a front polarizer, and an array of LCD cells between the polarizers. Each pixel of the achromatic LCD panel comprises three LCD cells (31, 32, and 33).

The color LCD panel comprises a rear polarizer, a front polarizer, an array of LCD cells between the polarizers, and an array of passive color filters between the LCD cell array and the front polarizer. Each pixel of the color LCD panel comprises three LCD cells (34, 35, and 36), and a red color filter (37) in front of LCD cell 34, a green color filter (38) in front of LCD cell 35, and a blue color filter (39) in front of LCD cell 36.

The model starts with a simple spectral transmission model of each liquid crystal cell between two polarizers:

$$T(\lambda, D) = T_{\min}(\lambda) + T(\lambda) \cdot f(D),$$

where $T(\lambda, D)$ is the light of frequency $\lambda$ transmitted by the cell when the cell is driven by drive value D (where D is a red drive value R for cell 34, a green drive value G for cell 35, a blue drive value B for cell 36, a luminance value P1 for cell 31, a luminance value P2 for cell 32, and a luminance value P3 for cell 33.

The spectral transmission model for any cell has a minimal transmission term, $T_{\min}(\lambda)$, and a variable transmission term. The variable term is modeled by scaling a nominal transmission by a one dimensional function, f(D), of the relevant drive value, D.

Each color cell consists of the basic liquid crystal transmission cell (34, 35, or 36) with a passive color filter. The effect of the passive color filter can be included by multiplying the simple transmission model by a static spectral transmission function for the color filter. For the color LCD panel, the cells can be modeled as:

$$T_R(\lambda, R) = \hat{T}_R(\lambda) \cdot T(\lambda, R) = \hat{T}_R(\lambda) \cdot (T_{\min}(\lambda) + T(\lambda) \cdot f(R)) = T_{R,\min}(\lambda) + T_R(\lambda) \cdot f(R),$$

$$T_G(\lambda, G) = \hat{T}_G(\lambda) \cdot T(\lambda, G) = \hat{T}_G(\lambda) \cdot (T_{\min}(\lambda) + T(\lambda) \cdot f(G)) = T_{G,\min}(\lambda) + T_G(\lambda) \cdot f(G),$$

and

$$T_B(\lambda, B) = \hat{T}_B(\lambda) \cdot T(\lambda, B) = \hat{T}_B(\lambda) \cdot (T_{\min}(\lambda) + T(\lambda) \cdot f(B)) = T_{B,\min}(\lambda) + T_B(\lambda) \cdot f(B),$$

where $\hat{T}_R(\lambda)$ is the static transmission function for red filter 37, $\hat{T}_G(\lambda)$ is the static transmission function for green filter 38, and $\hat{T}_B(\lambda)$ is the static transmission function for blue filter 39.

The cells in the achromatic LCD panel are assumed to be identical and do not have any color filters. Without distinguishing among subpixel channels, the achromatic LCD cell response can be modeled as:

$$T_P(\lambda, P) = T(\lambda, P) = T_{\min}(\lambda) + T(\lambda) \cdot f(P).$$

Since the cells of each panel are spatially separated from each other, their combined contribution to a pixel-level model is simply modeled by addition:

$$T_{RGB}(\lambda, R, G, B) = T_R(\lambda, R) + T_G(\lambda, G) + T_B(\lambda, B),$$

and

$$T_P(\lambda, P_1, P_2, P_3) = T_P(\lambda, P_1) + T_P(\lambda, P_2) + T_P(\lambda, P_3).$$

The static backlight is characterized by a spectral emission distribution $S(\lambda)$.

The total emitted spectrum is modeled as the product of the backlight spectral emission by the spectral transmissions of the two LCD panels:

$$I(\lambda, P_1, P_2, P_3, R, G, B) = T_P(\lambda, P_1, P_2, P_3) \cdot T_{RGB}(\lambda, R, G, B) \cdot S(\lambda).$$

By substitution of the specific models, the following explicit relationships are obtained:

$$
\begin{aligned}
I(\lambda, &P_1, P_2, P_3, R, G, B) \\
&= T_P(\lambda, P_1, P_2, P_3) \cdot T_{RGB}(\lambda, R, G, B) \cdot S(\lambda) \\
&= (T_P(\lambda, P_1) + T_P(\lambda, P_2) + T_P(\lambda, P_3)) \cdot (T_R(\lambda, R) + T_G(\lambda, G) + T_B(\lambda, B)) \cdot S(\lambda) \\
&= (3 \cdot T_{min}(\lambda) + T(\lambda) \cdot (f(P_1) + f(P_2) + f(P_3))) \cdot (T_R(\lambda, R) + T_G(\lambda, G) + T_B(\lambda, B)) \cdot S(\lambda) \\
&= (3 \cdot T_{min}(\lambda) + T(\lambda) \cdot (f(P_1) + f(P_2) + f(P_3))) \\
&\qquad \cdot (T_{R,min}(\lambda) + T_R(\lambda) \cdot f(R) + T_{G,min}(\lambda) + T_G(\lambda) \cdot f(G) + T_{B,min}(\lambda) + T_B(\lambda) \cdot f(B)) \cdot S(\lambda) \\
&= (3 \cdot T_{min}(\lambda) + T(\lambda) \cdot (f(P_1) + f(P_2) + f(P_3))) \\
&\qquad \cdot (T_{R,min}(\lambda) + T_{G,min}(\lambda) + T_{B,min}(\lambda) + T_R(\lambda) \cdot f(R) + T_G(\lambda) \cdot f(G) + T_B(\lambda) \cdot f(B)) \cdot S(\lambda) \\
&= \begin{pmatrix} 3 \cdot T_{min}(\lambda) \cdot (T_{R,min}(\lambda) + T_{G,min}(\lambda) + T_{B,min}(\lambda)) \\ + T(\lambda) \cdot (T_{R,min}(\lambda) + T_{G,min}(\lambda) + T_{B,min}(\lambda)) \cdot (f(P_1) + f(P_2) + f(P_3)) \\ + 3 \cdot T_{min}(\lambda) \cdot (T_R(\lambda) \cdot f(R) + T_G(\lambda) \cdot f(G) + T_B(\lambda) \cdot f(B)) \\ + T(\lambda) \cdot (T_R(\lambda) \cdot f(R) + T_G(\lambda) \cdot f(G) + T_B(\lambda) \cdot f(B)) \cdot (f(P_1) + f(P_2) + f(P_3)) \end{pmatrix} \cdot S(\lambda)
\end{aligned}
$$

By rewriting terms:

$$T_{min}(\lambda) = 3 \cdot T_{min}(\lambda) \cdot (T_{R,min}(\lambda) + T_{G,min}(\lambda) + T_{B,min}(\lambda)),$$

$$T_{P,RGB\,min}(\lambda) = T(\lambda) \cdot (T_{R,min}(\lambda) + T_{G,min}(\lambda) + T_{B,min}(\lambda)),$$

$$T_{R,P\,min}(\lambda) = 3 \cdot T_{min}(\lambda) \cdot T_R(\lambda),$$

$$T_{G,P\,min}(\lambda) = 3 \cdot T_{min}(\lambda) \cdot T_G(\lambda),$$

$$T_{B,P\,min}(\lambda) = 3 \cdot T_{min}(\lambda) \cdot T_B(\lambda),$$

$$T_{RP}(\lambda) = T(\lambda) \cdot T_R(\lambda),$$

$$T_{GP}(\lambda) = T(\lambda) \cdot T_G(\lambda),$$

$$T_{BP}(\lambda) = T(\lambda) \cdot T_B(\lambda),$$

$$f_P(P_1, P_2, P_3) = f(P_1) + f(P_2) + f(P_3),$$

and

$$f_P(P) = f_P(P_1, P_2, P_3) = f(P_1 = P) + f(P_2 = P) + f(P_3 = P).$$

The total spectral emission as a function of LCD drive values is modeled as:

$$
\begin{aligned}
& I(\lambda, P, R, G, B) \\
&= T_P(\lambda, P_1, P_2, P_3) \cdot T_{RGB}(\lambda, R, G, B) \cdot S(\lambda) \\
&= \begin{pmatrix} T_{\min}(\lambda) \\ + T_{P,RGB\min}(\lambda) \cdot f_P(P) \\ + T_{R,P\min}(\lambda) \cdot f(R) + T_{G,P\min}(\lambda) \cdot f(G) + T_{B,P\min}(\lambda) \cdot f(B) \\ + (T_{RP}(\lambda) \cdot f(R) + T_{GP}(\lambda) \cdot f(G) + T_{BP}(\lambda) \cdot f(B)) \cdot f_P(P) \end{pmatrix} \cdot S(\lambda) \\
&= I_{\min}(\lambda) \\
&\quad + I_{P,RGB\min}(\lambda) \cdot f_P(P) \\
&\quad + I_{R,P\min}(\lambda) \cdot f(R) + I_{G,P\min}(\lambda) \cdot f(G) + I_{B,P\min}(\lambda) \cdot f(B) \\
&\quad + (I_{RP}(\lambda) \cdot f(R) + I_{GP}(\lambda) \cdot f(G) + I_{BP}(\lambda) \cdot f(B)) \cdot f_P(P)
\end{aligned}
$$

$$(1)$$

In equation (1), $I_{\min}(\lambda)$ is the light transmission due to backlight only (with zero drive to the achromatic and color LCD panels), $I_{p,RGB\min}(\lambda) \cdot f_P(P)$ is the transmission due to an achromatic panel cell in response to non-zero achromatic panel drive P and zero color panel drives, and the other terms denote light transmission due to the corresponding color filtered cells of the color panel.

The CIE XYZ value displayed (by one pixel of the display) in response to a set of LCD drive values (P, R, G, and B) is expressed by the following well-known definition:

$$
\begin{bmatrix} X \\ Y \\ Z \end{bmatrix} (P, R, G, B) = \int I(\lambda, P, R, G, B) \cdot \begin{bmatrix} \bar{x}(\lambda) \\ \bar{y}(\lambda) \\ \bar{z}(\lambda) \end{bmatrix} \cdot d\lambda .
$$

By substitution of the spectral model into the foregoing definition, we convert the spectral model of equation (1) to the CIE XYZ model given by the last equation (to be referred to as "equation (2)") in the following set of equations:

$$\begin{bmatrix} X \\ Y \\ Z \end{bmatrix}(P,R,G,B)$$

$$= \int \left( \begin{matrix} I_{\min}(\lambda) \\ + I_{P,RGB\min}(\lambda)\cdot f_P(P) \\ + I_{R,P\min}(\lambda)\cdot f(R) + I_{G,P\min}(\lambda)\cdot f(G) + I_{B,P\min}(\lambda)\cdot f(B) \\ + (I_{RP}(\lambda)\cdot f(R) + I_{GP}(\lambda)\cdot f(G) + I_{BP}(\lambda)\cdot f(B))\cdot f_P(P) \end{matrix} \right) \cdot \begin{bmatrix} \overline{x}(\lambda) \\ \overline{y}(\lambda) \\ \overline{z}(\lambda) \end{bmatrix} \cdot d\lambda$$

$$= \int I_{\min}(\lambda)\cdot \begin{bmatrix} \overline{x}(\lambda) \\ \overline{y}(\lambda) \\ \overline{z}(\lambda) \end{bmatrix} \cdot d\lambda$$

$$+ \int I_{P,RGB\min}(\lambda)\cdot \begin{bmatrix} \overline{x}(\lambda) \\ \overline{y}(\lambda) \\ \overline{z}(\lambda) \end{bmatrix} \cdot d\lambda \cdot f_P(P)$$

$$+ \int I_{R,P\min}(\lambda)\cdot \begin{bmatrix} \overline{x}(\lambda) \\ \overline{y}(\lambda) \\ \overline{z}(\lambda) \end{bmatrix} \cdot d\lambda \cdot f(R) + \int I_{G,P\min}(\lambda)\cdot \begin{bmatrix} \overline{x}(\lambda) \\ \overline{y}(\lambda) \\ \overline{z}(\lambda) \end{bmatrix} \cdot d\lambda \cdot f(G) + \int I_{B,P\min}(\lambda)\cdot \begin{bmatrix} \overline{x}(\lambda) \\ \overline{y}(\lambda) \\ \overline{z}(\lambda) \end{bmatrix} \cdot d\lambda \cdot f(B)$$

$$+ \left( \int I_{RP}(\lambda)\cdot \begin{bmatrix} \overline{x}(\lambda) \\ \overline{y}(\lambda) \\ \overline{z}(\lambda) \end{bmatrix} \cdot d\lambda \cdot f(R) + \int I_{GP}(\lambda)\cdot \begin{bmatrix} \overline{x}(\lambda) \\ \overline{y}(\lambda) \\ \overline{z}(\lambda) \end{bmatrix} \cdot d\lambda \cdot f(G) + \int I_{BP}(\lambda)\cdot \begin{bmatrix} \overline{x}(\lambda) \\ \overline{y}(\lambda) \\ \overline{z}(\lambda) \end{bmatrix} \cdot d\lambda \cdot f(B) \right) \cdot f_P(P)$$

$$= \begin{bmatrix} X_{\min} \\ Y_{\min} \\ Z_{\min} \end{bmatrix}$$

$$+ \begin{bmatrix} X_{P,RGB\min} \\ Y_{P,RGB\min} \\ Z_{P,RGB\min} \end{bmatrix} \cdot f_P(P)$$

$$+ \begin{bmatrix} X_{R,P\min} \\ Y_{R,P\min} \\ Z_{R,P\min} \end{bmatrix} \cdot f(R) + \begin{bmatrix} X_{G,P\min} \\ Y_{G,P\min} \\ Z_{G,P\min} \end{bmatrix} \cdot f(G) + \begin{bmatrix} X_{B,P\min} \\ Y_{B,P\min} \\ Z_{B,P\min} \end{bmatrix} \cdot f(B)$$

$$+ \left( \begin{bmatrix} X_{RP} \\ Y_{RP} \\ Z_{Rp} \end{bmatrix} \cdot f(R) + \begin{bmatrix} X_{GP} \\ Y_{GP} \\ Z_{GP} \end{bmatrix} \cdot f(G) + \begin{bmatrix} X_{BP} \\ Y_{BP} \\ Z_{BP} \end{bmatrix} \cdot f(B) \right) \cdot f_P(P)$$

In general, the one-dimensional scaling functions of drive values are unique among the channels:

$$f(R) \to f_R(R)$$

$$f(G) \to f_G(G)$$

$$f(B) \rightarrow f_B(B).$$

By rewriting equation (2) in matrix-vector form, we obtain the following equations:

$$\begin{bmatrix} X \\ Y \\ Z \end{bmatrix}(P,R,G,B)$$

$$= \begin{bmatrix} X_{\min} \\ Y_{\min} \\ Z_{\min} \end{bmatrix}$$

$$+ \begin{bmatrix} X_{P,RGB\min} \\ Y_{P,RGB\min} \\ Z_{P,RGB\min} \end{bmatrix} \cdot f_P(P)$$

$$+ \begin{bmatrix} X_{R,P\min} & X_{G,P\min} & X_{B,P\min} \\ Y_{R,P\min} & Y_{G,P\min} & Y_{B,P\min} \\ Z_{R,P\min} & Z_{G,P\min} & Z_{B,P\min} \end{bmatrix} \cdot \begin{bmatrix} f(R) \\ f(G) \\ f(B) \end{bmatrix}$$

$$+ f_P(P) \cdot \begin{bmatrix} X_{RP} & X_{GP} & X_{BP} \\ Y_{RP} & Y_{GP} & Y_{BP} \\ Z_{RP} & Z_{GP} & Z_{BP} \end{bmatrix} \cdot \begin{bmatrix} f(R) \\ f(G) \\ f(B) \end{bmatrix}$$

$$= \begin{bmatrix} X_{\min} \\ Y_{\min} \\ Z_{\min} \end{bmatrix} + \begin{bmatrix} X_{P,RGB\min} \\ Y_{P,RGB\min} \\ Z_{P,RGB\min} \end{bmatrix} \cdot f_P(P) + \left( \begin{bmatrix} X_{R,P\min} & X_{G,P\min} & X_{B,P\min} \\ Y_{R,P\min} & Y_{G,P\min} & Y_{B,P\min} \\ Z_{R,P\min} & Z_{G,P\min} & Z_{B,P\min} \end{bmatrix} + f_P(P) \cdot \begin{bmatrix} X_{RP} & X_{GP} & X_{BP} \\ Y_{RP} & Y_{GP} & Y_{BP} \\ Z_{RP} & Z_{GP} & Z_{BP} \end{bmatrix} \right) \begin{bmatrix} f(R) \\ f(G) \\ f(B) \end{bmatrix}$$

Rewriting the last equation above gives the following equation (to be referred to as "equation (3)"):

$$\begin{bmatrix} X \\ Y \\ Z \end{bmatrix}(P,R,G,B)$$

$$= \begin{bmatrix} X_{\min} \\ Y_{\min} \\ Z_{\min} \end{bmatrix} + \begin{bmatrix} X_{P,RGB\min} \\ Y_{P,RGB\min} \\ Z_{P,RGB\min} \end{bmatrix} \cdot f_P(P) + \left( M_{RGB,P\min} + f_P(P) \cdot M_{RGB,P} \right) \cdot \begin{bmatrix} f_R(R) \\ f_G(G) \\ f_B(B) \end{bmatrix}$$

$$(3)$$

The first term on the right side of equation (3), $\begin{bmatrix} X_{\min} \\ Y_{\min} \\ Z_{\min} \end{bmatrix}$, expresses the contribution to the displayed output due to transmission of backlight (with zero drives to the achromatic and color LCD panels).

$$\begin{bmatrix} X_{P,RGB\,min} \\ Y_{P,RGB\,min} \\ Z_{P,RGB\,min} \end{bmatrix} \cdot f_P(P),$$

The second term on the right side of equation (3), expresses the contribution to the displayed output due to transmission of backlight (with non-zero drive P to the achromatic LCD panel and zero drive to the color LCD panel).

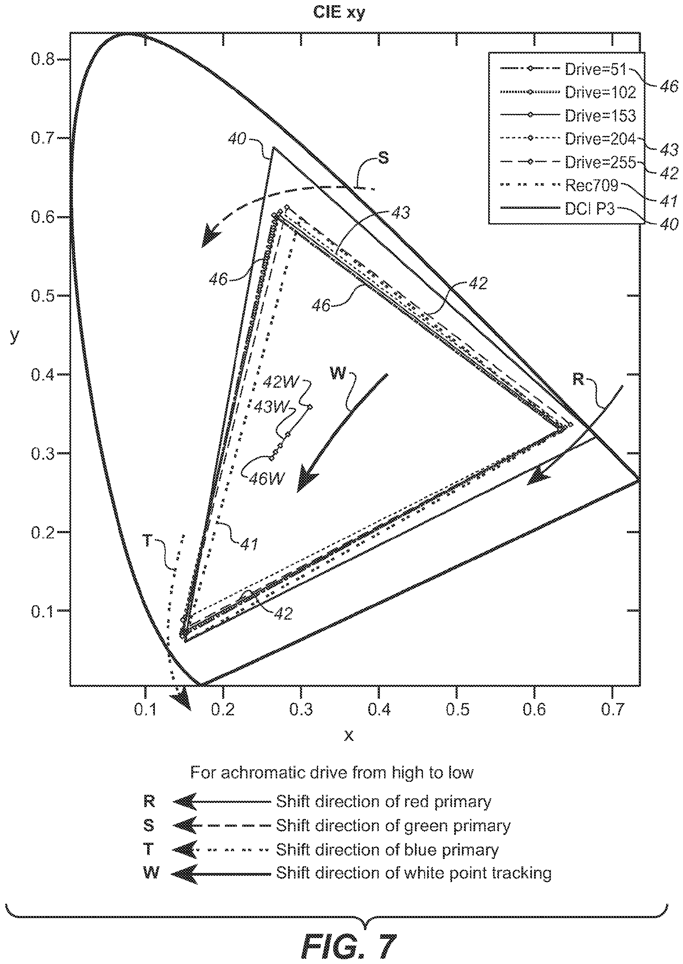

We have observed that when a dual LCD display (of the type described with reference to Fig. 6) is driven with a constant set of drive values (RGB) to its color LCD panel but with a varying drive value (P) to each cell of each pixel of its achromatic LCD, there is a shift in the chromaticities of the resulting displayed images. Fig. 7 illustrates the characteristics of the observed color shifts in chromaticities of the RGB color primaries as well as white point for the color LCD panel as a function of driving the achromatic LCD panel at various values. In Fig. 7, the vertices of triangle 46 represent the RGB components of the displayed color in response to driving the achromatic LCD panel at a low level (P = 51), the vertices of triangle 43 represent the RGB components of the displayed color in response to driving the achromatic LCD panel at a higher level (P = 204), the vertices of triangle 42 represent the RGB components of the displayed color in response to driving the achromatic LCD panel at an even higher level (P = 255), the vertices of triangle 41 represent standard Rec. 709 RGB values (for reference), and the vertices of triangle 40 represent standard DCI P3 values (also for reference). Point 46W represents the white point of the displayed color in response to driving the achromatic LCD panel at the high level (P = 255), point 43W represents the white point of the displayed color in response to driving the achromatic LCD panel at the intermediate level (P = 204), and point 42W represents the white point of the displayed color in response to driving the achromatic LCD panel at the low level (P = 51). Arrow W indicates the direction of shift of the white point (the direction of white point tracking) with decreasing achromatic LCD drive level. Arrow R indicates the direction of shift of the red primary with decreasing achromatic LCD drive level. Arrow S indicates the direction of shift of the green primary with decreasing achromatic LCD drive level. Arrow T indicates the direction of shift of the blue primary with decreasing achromatic LCD drive level.

Experimentation has indicated that the display exhibits a shift in color toward blue when the achromatic LCD panel is driven from high pixel values to low pixel values. In other words, the achromatic LCD panel is not truly achromatic as idealistically assumed. Detailed spectral transmission measurements on the display revealed that for a constant color LCD panel drive signal, the transmission for blue wavelengths decays slower than other parts of the spectrum when the achromatic panel is driven from high pixel values to low pixel values. To account for the color-shift, the model determined by equation (3) can be modified as indicated in equation (4), and the model indicated by equation (5) below can be extended (as indicated in equation (6) below) by allowing the color matrix to be a function of the achromatic panel drive values.

As a result of observing the characteristics of the color shift (with changing achromatic LCD panel drive) and analyzing the data from experiment, equation (3) can be modified as indicated in the following equation (4), to express a modified version of the model represented by equation (3):

$$\begin{bmatrix} X \\ Y \\ Z \end{bmatrix}(P,R,G,B)$$

$$= \begin{bmatrix} X_{min} \\ Y_{min} \\ Z_{min} \end{bmatrix} + \begin{bmatrix} X_{P,RGB\,min} \\ Y_{P,RGB\,min} \\ Z_{P,RGB\,min} \end{bmatrix} \cdot f_P(P) + \left( M_{RGB,P\,min} + f_P(P) \cdot \left( M_{RGB,P} + h_P(P) \cdot \Delta M_{RGB,P} \right) \right) \cdot \begin{bmatrix} f_R(R) \\ f_G(G) \\ f_B(B) \end{bmatrix}$$

$$(4)$$

Equation (4) represents a color-shift model with variable black level (having a fixed component indicated by

$$\begin{bmatrix} X_{min} \\ Y_{min} \\ Z_{min} \end{bmatrix}$$

the first term, ), but which is variable (as indicated by the second and third terms on the right side of the equation). It accounts (using the first three terms on the right side of the question) for nonlinearity in the optical multiplication of the two LCD panels (in a manner allowing implementation of dynamic grey-scale tracking offset).

Equation (4) differs from equation (3) by expressing a first order approximation which summarizes the effect of the observed color shift (due to changing achromatic LCD panel drive) as an interpolation between two color matrices, $M_{RGB,P}$ and $\Delta M_{RGB,P}$. The approximation is devised based on the observation that the color shift on primaries and white point track along straight lines almost perfectly. One matrix, $M_{RGB,P}$, is static and describes the color primaries and white point for one end of the achromatic panel drive range (e.g., minimum achromatic panel drive). The other matrix, $\Delta M_{RGB,P}$ which is scaled by the interpolation function $h_P(P)$, describes the difference in color primaries and white point from the static matrix at the other end of the achromatic panel drive range.

The color-shift model (with variable black level) of equation (4) is useful in many applications. In operation when one (but not both) of the two LCD panels of a dual LCD panel display are driven at the lowest drive value, the black level would rise above the static black level described by the first term on the right side of equation (4). Each variable black level term of equation (4) is a function of the either the color LCD drive or the achromatic LCD drive but not both at the same time.

A simple model, obtained by ignoring the first three terms on the right side of equation (3), describes the basic multiplicative property of the achromatic and color panel responses in a dual LCD configuration having an achromatic LCD panel and a color LCD panel:

$$\begin{bmatrix} X \\ Y \\ Z \end{bmatrix}(P,R,G,B) = f_P(P) \cdot M_{RGB,P} \cdot \begin{bmatrix} f_R(R) \\ f_G(G) \\ f_B(B) \end{bmatrix} \text{ where } M_{RGB,P} = \begin{bmatrix} X_{RP} & X_{GP} & X_{BP} \\ Y_{RP} & Y_{GP} & Y_{BP} \\ Z_{RP} & Z_{GP} & Z_{BP} \end{bmatrix} \quad (5)$$

As a result of observing the characteristics of the color shift (with changing achromatic LCD panel drive) and analyzing the data from experiment, equation (5) can be modified as indicated in the following equation (6), to express a modified version of the equation (5) model:

$$\begin{bmatrix} X \\ Y \\ Z \end{bmatrix}(P,R,G,B) = f_P(P) \cdot \left( M_{RGB,P} + h_P(P) \cdot \Delta M_{RGB,P} \right) \cdot \begin{bmatrix} f_R(R) \\ f_G(G) \\ f_B(B) \end{bmatrix} \quad (6)$$

Equation (6) differs from equation (5) by expressing a first order approximation which summarizes the effect of the observed color shift (due to changing achromatic LCD panel drive) as an interpolation between two color matrices, $M_{RGB,P}$ and $\Delta M_{RGB,P}$. The approximation is devised based on the observation that the color shift on primaries and white point track along straight lines almost perfectly. One matrix, $M_{RGB,P}$, is static and describes the color primaries and white point for one end of the achromatic panel drive range (e.g., minimum achromatic panel drive). The other matrix, $\Delta M_{RGB,P}$ which is scaled by the interpolation function $h_P(P)$, describes the difference in color primaries and white point from the static matrix at the other end of the achromatic panel drive range.

A higher order model is obtained by modifying the equation (6) model, and is expressed in the following equation (7):

$$\begin{bmatrix} X \\ Y \\ Z \end{bmatrix}(P,R,G,B) = f_P(P) \cdot \left( M_{RGB,P} + \begin{bmatrix} h_{RP}(P) & 0 & 0 \\ 0 & h_{GP}(P) & 0 \\ 0 & 0 & h_{BP}(P) \end{bmatrix} \cdot \Delta M_{RGB,P} \right) \cdot \begin{bmatrix} f_R(R) \\ f_G(G) \\ f_B(B) \end{bmatrix} \quad (7)$$

The Equation (7) model allows for a different interpolation function for each color primary and can capture slight curvatures to the chromaticity and white point tracks.

The color-shift model of equation (6) can be modified to take into account black level tracking, by adding the first term from the right side of equation (3) to the right side of equation (6), to obtain the model expressed in the following equation (8): ,

$$\begin{bmatrix} X \\ Y \\ Z \end{bmatrix}(P,R,G,B) = \begin{bmatrix} X_{\min} \\ Y_{\min} \\ Z_{\min} \end{bmatrix} + f_P(P) \cdot \left( M_{RGB,P} + h_P(P) \cdot \Delta M_{RGB,P} \right) \cdot \begin{bmatrix} f_R(R) \\ f_G(G) \\ f_B(B) \end{bmatrix} \quad (8)$$

There is a need for accurate black level tracking, as enabled using the equation (8) model. Due to the finite contrast of LCD panels, even when both the achromatic LCD panel and the color LCD panel of a dual LCD panel display are driven at lowest drive values, the LCD panels would still transmit a non-zero component of backlight. A simple extension is to add a fixed offset (the first term on the right side of equation (8) to the model set forth in equation (6).

Any of equations 3, 4, 6, 7, and 8 can be expressed in form $E = F \cdot H = \begin{bmatrix} X \\ Y \\ Z \end{bmatrix}(P,R,G,B)$, where E, F, and H are matrices, E determines the color panel drive values (e.g., X, Y, and Z drive values assuming an XYZ color space, from which R, G, and B drive values can be determined by conventional color space transformation) for displaying a target color (e.g., determined by an input image pixel, R, G, B) at a pixel of the display while the achromatic panel is driven by achromatic panel drive value P (e.g., also determined by the input image pixel), F represents a contribution to the displayed output derived from fixed (e.g., static backlight) values and achromatic panel drive value P, and H represents a contribution to the displayed output derived from color panel drive values. By so expressing any of equations 3, 4, 6, 7, and 8, it is apparent that a set of color panel drive values R, G, and B for driving the display to display the target color (assuming the fixed values and the specific achromatic panel drive value P) can be determined by inversion, or in other words by solving the expression: $H = F^{-1} \cdot E$. This can be done on the fly (by a processor) in an embodiment of the inventive controller. Alternatively, it can be done during a preliminary step, and the resulting color panel drive values can then be loaded into an LUT of an embodiment of the inventive controller (e.g., into LUT 20 of Fig. 5), from which they can be read out in response to a set of color values determining a target color (i.e., color components of, or determined from, an input image pixel) and an achromatic panel drive value P. In another embodiment of the inventive controller, precomputed inverse matrices for several achromatic panel drive values P may be loaded into an LUT and then interpolated to generate an approximate inverse matrix for a particular achromatic panel drive value P without computing a matrix inverse on the fly.

Similarly, by expressing any of equations 3, 4, 6, 7, and 8 in form:

$$\begin{bmatrix} X \\ Y \\ Z \end{bmatrix} = \begin{bmatrix} X_{\min} \\ Y_{\min} \\ Z_{\min} \end{bmatrix} + \begin{bmatrix} X_{P,RGB\min} \\ Y_{P,RGB\min} \\ Z_{P,RGB\min} \end{bmatrix} \cdot f_P(P) + M_{RGB}(P) \cdot \begin{bmatrix} f_R(R) \\ f_G(G) \\ f_B(B) \end{bmatrix}$$

it is apparent that a set of color panel drive values R, G, and B for driving the display to display a target color (assuming fixed display state values and a specific achromatic panel drive value P) can be determined by inversion, or in other words by solving the expression:

$$\begin{bmatrix} f_R(R) \\ f_G(G) \\ f_B(B) \end{bmatrix} = \left( M_{RGB}(P) \right)^{-1} \cdot \left( \begin{bmatrix} X \\ Y \\ Z \end{bmatrix} - \begin{bmatrix} X_{\min} \\ Y_{\min} \\ Z_{\min} \end{bmatrix} - \begin{bmatrix} X_{P,RGB\min} \\ Y_{P,RGB\min} \\ Z_{P,RGB\min} \end{bmatrix} \cdot f_P(P) \right).$$

This can be done on the fly (by a graphics processor or other processor) in an embodiment of the inventive controller. Alternatively, it can be done during a preliminary step, and the resulting color panel drive values can then be loaded into an LUT of an embodiment of the inventive controller (e.g., into LUT 20 of Fig. 5), from which they can be read out in response to a set of color values determining a target color (i.e., color components of, or determined from, an input image pixel) and an achromatic panel drive value P. In another embodiment of the inventive controller, precomputed inverse matrices for several achromatic panel drive values P may be loaded into an LUT and then interpolated to generate an approximate inverse matrix for a particular achromatic panel drive value P without computing a matrix inverse on the fly. In the two previous equations, the matrix $M_{RGB}(P)$ depends, in general on the drive value P. In the special case that $M_{RGB}(P) = M_{RGB}$, so that the matrix $M_{RGB}$ is independent of P, then its inverse should be precomputed and stored to avoid computing the inverse of a static matrix on the fly.

Some embodiments of the present invention provide extended viewing angles. The use of conventional LCD panels (without red, green or blue color filters) as achromatic LCD panels allows for much greater resolution of contrast enhancement, when each achromatic LCD panel is used as a background or foreground panel with another (color LCD) panel. This extra resolution becomes even more important when an achromatic LCD panel is coupled a color LCD panel having a different resolution, as it allows for adjustable viewing angles across the display with minimized visual artifacts.

In the case that the achromatic panel has pixels (referred to as "sub-pixels" since they are smaller than pixels of the color LCD panel in the same image chain) in clusters of four in a square configuration (each $2 \times 2$ cluster of subpixels of the achromatic panel aligned with one pixel of the color LCD panel), greater control is possible as this doubles the resolution in both horizontal and vertical directions. Existing image processing techniques for image scaling can be applied to these sub-pixel clusters if treated as individual control points, allowing for variable viewing angles and distances. To widen viewing angles (e.g., to accommodate multiple simultaneous viewers), a Gaussian or similar low pass filter can be applied to the achromatic panel drive values (e.g., by bilateral filtering module 478 of FIG. 4C, configured to perform spatial and range filtering).

In some embodiments, the inventive display includes modulators in addition to an achromatic LCD panel and a color LCD panel, and it is within the scope of the invention to generate drive signals for all such modulators. For example, a display with three modulating LCD panels (e.g., two achromatic LCD panels and a color LCD panel) can be driven in accordance with some embodiments.

The present invention has been described using the terms image-generating panel (or color LCD panel) and contrast-enhancing panel (or achromatic LCD panel). It should be understood that both panels generate images, and both panels impart contrast into a final image for display. The image-generating panel, in typical embodiments, imparts color and contrast through a combination of filtering and brightness modulation, and the achromatic LCD panel imparts contrast, or enhancing contrast, via brightness modulation. It should also be understood that in variations on the described embodiments, the achromatic LCD panel could also include color filtering, or other variations of function in one or both of the achromatic panel and color panel could be implemented.

In a class of embodiments, the inventive method is a method for determining color panel drive values for a color LCD panel of a dual LCD display, said dual LCD panel display also including an achromatic LCD panel, said method including the steps of:

measuring colors displayed by the display in response to sets of input pixels, while driving the color LCD panel with color panel drive values determined from the sets of input pixels and driving the achromatic LCD panel with achromatic panel drive values determined from the sets of input pixels;

comparing a displayed color, displayed by the display in response to each of the sets of input pixels, with a target color determined by said each of the sets of input pixels; and

determining a set of corrected color panel drive values for each of the sets of input pixels, such that the display will display the target color in response to the corrected color panel drive values and the achromatic panel drive values determined from said each of the sets of input pixels, and such that interpolation can be performed on the corrected color panel drive values to determine a full set of corrected color panel drive values, whereby corrected color panel drive values selected from the full set of corrected color panel drive values in response to input pixels determine a drive signal for driving the color LCD panel in a manner intended to compensate dynamically for variations in color of light transmitted by the achromatic LCD panel due to varying drive conditions of said achromatic LCD panel determined by the input pixels.

The method can also include the step of driving the display in response to a sequence of input pixels in a manner that accounts for variations of color of light transmitted by the achromatic LCD panel in response to variation of the input pixels, including by determining an achromatic panel drive value set and a color panel drive value set in response to each input pixel of a sequence of input pixels, wherein each said color panel drive value set is a subset of the full set of corrected color panel drive values. In some embodiments, the display is driven in response to the sequence of input pixels in a manner accounting for nonlinearity in optical multiplication of the color LCD panel and the achromatic LCD panel in response to the input pixels. In some embodiments, the display is driven in response to the sequence of input pixels in a manner implementing dynamic grey-scale tracking offset.

In describing preferred embodiments of the present invention illustrated in the drawings, specific terminology is employed for the sake of clarity. However, the present invention is not intended to be limited to the specific terminology so selected, and it is to be understood that each specific element includes all technical equivalents which operate in a similar manner. Furthermore, the inventors recognize that newly developed technologies not now known may also be substituted for the described parts and still not depart from the scope of the present invention. All other described items, including, but not limited to panels, LCDs, polarizers, controllable panels, displays, filters, glasses, software, and/or algorithms, etc. should also be considered in light of any and all available equivalents.

Portions of the present invention may be conveniently implemented using a conventional general purpose or a specialized digital computer or microprocessor programmed according to the teachings of the present disclosure, as will be apparent to those skilled in the computer art.

Appropriate software coding can readily be prepared by skilled programmers based on the teachings of the present disclosure, as will be apparent to those skilled in the software art. The invention may also be implemented by the preparation of application specific integrated circuits or by interconnecting an appropriate network of conventional component circuits, as will be readily apparent to those skilled in the art based on the present disclosure.

The present invention includes a computer program product which is a storage medium (media) having instructions stored thereon/in which can be used to control, or cause, a computer to perform any of the processes of the present invention. The storage medium can include, but is not limited to, any type of disk including floppy disks, mini disks (MD's), optical discs, DVD, HD-DVD, Blue-ray, CD-ROMS, CD or DVD RW+/-, micro-drive, and magneto-optical disks, ROMs, RAMs, EPROMs, EEPROMs, DRAMs, VRAMs, flash memory devices (including flash cards, memory sticks), magnetic or optical cards, SIM cards, MEMS, nanosystems (including molecular memory ICs), RAID devices, remote data storage/archive/warehousing, or any type of media or device suitable for storing instructions and/or data.

Stored on any one of the computer readable medium (media), the present invention includes software for controlling both the hardware of the general purpose/specialized computer or microprocessor, and for enabling the computer or microprocessor to interact with a human user or other mechanism utilizing the results of the present invention. Such software may include, but is not limited to, device drivers, operating systems, and user applications. Ultimately, such computer readable media further includes software for performing the present invention, as described above.

Included in the programming (software) of the general/specialized computer or microprocessor are software modules for implementing the teachings of the present invention, including, but not limited to, calculating pixel/sub-pixel blurring of a local dimming panel, calculating color correction or characterizations, preparing image signals and applying them to driver and/or other electronics to energize backlights, panels, or other devices in a display, calculating luminance values, interpolating, averaging, or adjusting luminance based on any of the factors described herein, including a desired luminance for a pixel or region of an image to be displayed, and the display, storage, or communication of results according to the processes of the present invention.

The present invention may suitably comprise, consist of, or consist essentially of, any of element (the various parts or features of the invention) and their equivalents as described herein. Further, the present invention illustratively disclosed herein may be practiced in the absence of any element, whether or not specifically disclosed herein. Obviously, numerous modifications and variations of the present invention are possible in light of the above teachings. It is therefore to be understood that within the scope of the appended claims, the invention may be practiced otherwise than as specifically described herein.

**Claims**

1. A controller for a dual LCD display, the dual LCD display comprising:

    a color LCD panel,
    an achromatic LCD panel, and
    a backlight, positioned such that light from the backlight illuminates one of the achromatic LCD panel and the color LCD panel, and light transmitted through said one of the achromatic LCD panel and the color LCD panel illuminates the other one of the achromatic LCD panel and the color LCD panel;
    said controller including:

        an achromatic panel drive subsystem configured to generate achromatic panel drive values determining a first drive signal for the achromatic LCD panel in response to an input image signal; and
        a color panel drive subsystem, coupled to the achromatic panel drive subsystem and configured to generate color panel drive values determining a second drive signal for the color LCD panel in response to the input image signal, **characterized in**, generation of the color panel drive values is based on a color-shift model that accounts and compensates for variations in the chromaticity due to the shift in color towards blue of light transmitted by the achromatic LCD panel due to variations in the level of the first drive signal when said achromatic LCD panel is driven by said first drive signal.

2. The controller of claim 1, wherein the achromatic panel drive subsystem is configured to determine an achromatic panel drive value set in response to an input image pixel, the color panel drive subsystem is configured to determine a color panel drive value set in response to the input image pixel, and the color panel drive subsystem includes a look-up table and is configured to read the color panel drive value set from the look-up table in response to the input image pixel and at least one value determining the achromatic panel drive value set.

3. The controller of claim 2, wherein the achromatic panel drive value set is a single achromatic panel drive value, P, or wherein the achromatic panel drive value set is a trio of achromatic panel drive values, P1, P2, and P3, for driving three cells of a pixel of the achromatic LCD panel.

4. The controller of claim 1, wherein the achromatic panel drive subsystem is configured to determine an achromatic panel drive value set in response to an input image pixel, and the color panel drive subsystem is configured to generate data determining a color panel drive value set in response to the input image pixel and at least one value determining the achromatic panel drive value set.

5. The controller of claim 1, wherein the achromatic panel drive subsystem is configured to determine an achromatic panel drive value set in response to each input image pixel of a sequence of input image pixels, the color panel drive subsystem is configured to determine a color panel drive value set in response to said each input image pixel, and the color panel drive subsystem is configured to perform color rotation to generate data determining the color panel drive value set, in response to said each input image pixel and at least one value determining the achromatic panel drive value set for said each input image pixel.

6. The controller of claim 5, wherein the color panel drive subsystem is configured to perform the color rotation to compensate for nonlinearity in optical multiplication of the color LCD panel and the achromatic LCD panel in response to the input image pixels, or
wherein the color panel drive subsystem is configured to perform the color rotation to implement dynamic grey-scale tracking offset.

7. The controller of claim 1, wherein the achromatic panel drive subsystem is configured to determine an achromatic panel drive value set in response to each input image pixel of a sequence of input image pixels, the color panel drive subsystem is configured to determine a color panel drive value set in response to said each input image pixel, and the color panel drive subsystem is configured to perform interpolated color rotation to generate data determining the color panel drive value set in response to said each input image pixel and at least one value determining the achromatic panel drive value set for said each input image pixel, including by determining first color panel drive values for input image pixels having a first luminance, and generating corrected color components by color rotating color components of said each input image pixel by amounts determined by the difference between the actual luminance of said each input image pixel and the first luminance, and determining the color panel drive value set for said each input image pixel from the corrected input color components and the first color panel drive values.

8. The controller of claim 1, wherein the achromatic panel drive subsystem includes an achromatic drive look-up table configured to output the achromatic panel drive values in response to values generated by said achromatic panel drive subsystem in response to the input image signal, and the color panel drive subsystem includes a color drive look-up table configured to output the color panel drive values in response to the input image signal.

9. The controller of claim 8, wherein the color drive look-up table is configured to output the color panel drive values in response to the input image signal and the achromatic panel drive values, or
wherein the color drive look-up table is configured to output the color panel drive values in response to the input image signal and intermediate values generated by the achromatic panel drive subsystem during generation of the achromatic panel drive values.

10. The controller of claim 8, wherein the achromatic drive look-up table is configured to output the achromatic panel drive values in response to interpolated and filtered luminance values generated by said achromatic panel drive subsystem in response to the input image signal, or
wherein the achromatic panel drive subsystem is configured to determine an achromatic panel drive value set in response to each input image pixel of a sequence of input image pixels, the color panel drive subsystem is configured to generate the color panel drive value set in response to said each input image pixel, and the color drive look-up table is configured to perform color rotation to generate the color panel drive value set, in response to said each input image pixel and at least one value determining the achromatic panel drive value set for said each input image pixel.

**11.** A method for generating drive signals for a dual LCD display, the dual LCD display comprising:

a color LCD panel,
an achromatic LCD panel, and
a backlight, positioned such that light from the backlight illuminates one of the achromatic LCD panel and the color LCD panel, and light transmitted through said one of the achromatic LCD panel and the color LCD panel illuminates the other one of the achromatic LCD panel and the color LCD panel; said method including the steps of:

generating achromatic panel drive values determining a first drive signal for the achromatic LCD panel in response to an input image signal; and
generating color panel drive values determining a second drive signal for the color LCD panel in response to the input image signal, **characterized in**, generating the color panel drive values is based on a color-shift model that accounts and compensates for variations in the chromaticity due to the shift in color towards blue of light transmitted by the achromatic LCD panel due to variations in the level of the first drive signal when said achromatic LCD panel is driven by said first drive signal.

**12.** The method of claim 11, wherein the color panel drive values are read from the second look-up table in response to the input image signal and the achromatic panel drive values, or
wherein the color panel drive values are read from the second look-up table in response to the input image signal and intermediate values generated in response to the input image signal.

**13.** A dual LCD display, comprising:

a color LCD panel;
an achromatic LCD panel;
a backlight, positioned such that light from the backlight illuminates one of the achromatic LCD panel and the color LCD panel, and light transmitted through said one of the achromatic LCD panel and the color LCD panel illuminates the other one of the achromatic LCD panel and the color LCD panel; and
a controller, as recited in any one of claims 1 to 10.

**14.** The display of claim 13, wherein the color LCD panel and the achromatic LCD panel are positioned such that light from the backlight illuminates the achromatic LCD panel, and light transmitted through the achromatic LCD panel illuminates the color LCD panel.

**15.** The display of claim 13, wherein the dual LCD panel display is implemented as a high dynamic range display.

**Patentansprüche**

**1.** Controller für einen Doppel-LCD-Bildschirm, wobei der Doppel-LCD-Bildschirm Folgendes umfasst:

ein Farb-LCD-Panel,
ein Unbunt-LCD-Panel, und
eine Rückbeleuchtung, derart positioniert, dass Licht von der Rückbeleuchtung das Unbunt-LCD-Panel oder das Farb-LCD-Panel beleuchtet und durch das Unbunt-LCD-Panel oder das Farb-LCD-Panel transmittierte Licht das andere des Unbunt-LCD-Panels oder des Farb-LCD-Panels beleuchtet;
wobei der Controller Folgendes aufweist:

ein Unbunt-Panel-Treibersubsystem, das ausgelegt ist zum Erzeugen von Unbunt-Panel-Treiberwerten, die ein erstes Treibersignal für das Unbunt-LCD-Panel bestimmen, als Reaktion auf ein Eingangsbildsignal; und
ein Farb-Panel-Treibersubsystem, gekoppelt mit dem Unbunt-Panel-Treibersubsystem und ausgelegt zum Erzeugen von Farb-Panel-Treiberwerten, die ein zweites Treibersignal für das Farb-LCD-Panel bestimmen, als Reaktion auf das Eingangsbildsignal, **dadurch gekennzeichnet, dass**

Erzeugen der Farb-Panel-Treiberwerte auf einem Farbverschiebungsmodell basiert, das Variationen der Chromatizität aufgrund der Farbverschiebung ins Blaue von durch das Unbunt-LCD-Panel transmittierte Licht aufgrund von Variationen des Pegels des ersten Treibersignals, berücksichtigt und ausgleicht, wenn das Unbunt-LCD-Panel von dem ersten Treibersignal angesteuert wird.

2. Controller nach Anspruch 1, wobei das Unbunt-Panel-Treibersubsystem ausgelegt ist zum Bestimmen eines Unbunt-Panel-Treiberwertesatzes als Reaktion auf ein Eingangsbildpixel, das Farb-Panel-Treibersubsystem ausgelegt ist zum Bestimmen eines Farb-Panel-Treiberwertesatzes als Reaktion auf das Eingangsbildpixel und das Farb-Panel-Treibersubsystem eine Nachschlagetabelle aufweist und dafür ausgelegt ist, den Farb-Panel-Treiberwertesatzes aus der Nachschlagetabelle auszulesen, als Reaktion auf das Eingangsbildpixel und mindestens einen Wert, der den Unbunt-Panel-Treiberwertesatz bestimmt.

3. Controller nach Anspruch 2, wobei der Unbunt-Panel-Treiberwertesatz ein einziger Unbunt-Panel-Treiberwert, P, ist oder
wobei der Unbunt-Panel-Treiberwertesatz ein Trio von Unbunt-Panel-Treiberwerten, P1, P2 und P3, zum Ansteuern von drei Zellen eines Pixels des Unbunt-LCD-Panels ist.

4. Controller nach Anspruch 1, wobei das Unbunt-Panel-Treibersubsystem ausgelegt ist zum Bestimmen eines Unbunt-Panel-Treiberwertesatzes als Reaktion auf ein Eingangsbildpixel und das Farb-Panel-Treibersubsystem ausgelegt ist zum Erzeugen von Daten zum Bestimmen eines Farb-Panel-Treiberwertesatzes als Reaktion auf das Eingangsbildpixel und mindestens einen Wert, der den Unbunt-Panel-Treiberwertesatz bestimmt.

5. Controller nach Anspruch 1, wobei das Unbunt-Panel-Treibersubsystem ausgelegt ist zum Bestimmen eines Unbunt-Panel-Treiberwertesatzes als Reaktion auf jedes Eingangsbildpixel einer Abfolge von Eingangsbildpixeln, das Farb-Panel-Treibersubsystem ausgelegt ist zum Bestimmen eines Farb-Panel-Treiberwertesatzes als Reaktion auf das jede Eingangsbildpixel und das Farb-Panel-Treibersubsystem ausgelegt ist zum Durchführen von Farbdrehung, um Daten zu erzeugen, die den Farb-Panel-Treiberwertesatz bestimmen, als Reaktion auf das jede Eingangsbildpixel und mindestens einen Wert, der den Unbunt-Panel-Treiberwertesatz für das jede Eingangsbildpixel bestimmt.

6. Controller nach Anspruch 5, wobei das Farb-Panel-Treibersubsystem ausgelegt ist zum Durchführen der Farbdrehung zum Ausgleichen von Nichtlinearität bei optischer Multiplikation des Farb-LCD-Panels und des Unbunt-LCD-Panels als Reaktion auf die Eingangsbildpixel, oder
wobei das Farb-Panel-Treibersubsystem ausgelegt ist zum Durchführen der Farbdrehung, um Dynamischer-Weißabgleich-Nachführungsversatz zu implementieren.

7. Controller nach Anspruch 1, wobei das Unbunt-Panel-Treibersubsystem ausgelegt ist zum Bestimmen eines Unbunt-Panel-Treiberwertesatzes als Reaktion auf jedes Eingangsbildpixel einer Abfolge von Eingangsbildpixeln, das Farb-Panel-Treibersubsystem ausgelegt ist zum Bestimmen eines Farb-Panel-Treiberwertesatzes als Reaktion auf das jede Eingangsbildpixel und das Farb-Panel-Treibersubsystem ausgelegt ist zum Durchführen von interpolierter Farbdrehung, um Daten zu erzeugen, die den Farb-Panel-Treiberwertesatz bestimmen, als Reaktion auf das jede Eingangsbildpixel und mindestens einen Wert, der den Unbunt-Panel-Treiberwertesatz für das jede Eingangsbildpixel bestimmt, einschließlich durch Bestimmen von ersten Farb-Panel-Treiberwerten für Eingangsbildpixel mit einer ersten Luminanz, und Erzeugen von korrigierten Farbkomponenten durch Farbdrehung von Farbkomponenten von dem jeden Eingangsbildpixel um Beträge, die durch die Differenz zwischen der tatsächlichen Luminanz von dem jeden Eingangsbildpixel und der ersten Luminanz bestimmt werden, und Bestimmen des Farb-Panel-Treiberwertesatzes für das jede Eingangsbildpixel aus den korrigierten Eingangsfarbkomponenten und den ersten Farb-Panel-Treiberwerten.

8. Controller nach Anspruch 1, wobei das Unbunt-Panel-Treibersubsystem eine Unbunt-Treiber-Nachschlagetabelle aufweist, ausgelegt zum Ausgeben der Unbunt-Panel-Treiberwerte als Reaktion auf Werte, die durch das Unbunt-Panel-Treibersubsystem als Reaktion auf das Eingangsbildsignal erzeugt werden, und das Farb-Panel-Treibersubsystem eine Farb-Treiber-Nachschlagetabelle aufweist, ausgelegt zum Ausgeben der Farb-Panel-Treiberwerte als Reaktion auf das Eingangsbildsignal.

9. Controller nach Anspruch 8, wobei die Farb-Treiber-Nachschlagetabelle ausgelegt ist zum Ausgeben der Farb-Panel-Treiberwerte als Reaktion auf das Eingangsbildsignal und die Unbunt-Panel-Treiberwerte, oder
wobei die Farb-Treiber-Nachschlagetabelle ausgelegt ist zum Ausgeben der Farb-Panel-Treiberwerte als Reaktion auf das Eingangsbildsignal und durch das Unbunt-Panel-Treibersubsystem während Erzeugung der Unbunt-Panel-Treiberwerte erzeugte Zwischenwerte.

10. Controller nach Anspruch 8, wobei die Unbunt-Treiber-Nachschlagetabelle ausgelegt ist zum Ausgeben der Unbunt-Panel-Treiberwerte als Reaktion auf interpolierte und gefilterte durch das Unbunt-Panel-Treibersubsystem als Reaktion auf das Eingangsbildsignal erzeugte Luminanzwerte, oder

wobei das Unbunt-Panel-Treibersubsystem ausgelegt ist zum Bestimmen eines Unbunt-Panel-Treiberwertesatzes als Reaktion auf jedes Eingangsbildpixel einer Abfolge von Eingangsbildpixeln, das Farb-Panel-Treibersubsystem ausgelegt ist zum Erzeugen des Farb-Panel-Treiberwertesatzes als Reaktion auf das jede Eingangsbildpixel und die Farb-Treiber-Nachschlagetabelle ausgelegt ist zum Durchführen von Farbdrehung, um den Farb-Panel-Treiberwertesatz zu erzeugen, als Reaktion auf das jede Eingangsbildpixel und mindestens einen Wert, der den Unbunt-Panel-Treiberwertesatz für das jede Eingangsbildpixel bestimmt.

11. Verfahren zum Erzeugen von Ansteuersignalen für einen Doppel-LCD-Bildschirm, wobei der Doppel-LCD-Bildschirm Folgendes umfasst:

ein Farb-LCD-Panel,
ein Unbunt-LCD-Panel, und
eine Rückbeleuchtung, derart positioniert, dass Licht von der Rückbeleuchtung das Unbunt-LCD-Panel oder das Farb-LCD-Panel beleuchtet und durch das Unbunt-LCD-Panel oder das Farb-LCD-Panel transmittierte Licht das andere des Unbunt-LCD-Panels oder des Farb-LCD-Panels beleuchtet;
wobei das Verfahren die folgenden Schritte aufweist:

Erzeugen von Unbunt-Panel-Treiberwerten, die ein erstes Treibersignal für das Unbunt-LCD-Panel bestimmen, als Reaktion auf ein Eingangsbildsignal; und
Erzeugen von Farb-Panel-Treiberwerten, die ein zweites Treibersignal für das Farb-LCD-Panel bestimmen, als Reaktion auf das Eingangsbildsignal, **dadurch gekennzeichnet, dass**

Erzeugen der Farb-Panel-Treiberwerte auf einem Farbverschiebungsmodell basiert, das Variationen der Chromatizität aufgrund der Farbverschiebung ins Blaue von durch das Unbunt-LCD-Panel transmittierte Licht aufgrund von Variationen des Pegels des ersten Treibersignals, berücksichtigt und ausgleicht, wenn das Unbunt-LCD-Panel von dem ersten Treibersignal angesteuert wird.

12. Verfahren nach Anspruch 11, wobei die Farb-Panel-Treiberwerte aus der zweiten Nachschlagetabelle ausgelesen werden, als Reaktion auf das Eingangsbildsignal und die Unbunt-Panel-Treiberwerte, oder
wobei die Farb-Panel-Treiberwerte aus der zweiten Nachschlagetabelle ausgelesen werden, als Reaktion auf das Eingangsbildsignal und auf als Reaktion auf das Eingangsbildsignal erzeugte Zwischenwerte.

13. Doppel-LCD-Bildschirm, umfassend:

ein Farb-LCD-Panel,
ein Unbunt-LCD-Panel, und
eine Rückbeleuchtung, derart positioniert, dass Licht von der Rückbeleuchtung das Unbunt-LCD-Panel oder das Farb-LCD-Panel beleuchtet und durch das Unbunt-LCD-Panel oder das Farb-LCD-Panel transmittierte Licht das andere des Unbunt-LCD-Panels oder des Farb-LCD-Panels beleuchtet; und
einen Controller nach einem der Ansprüche 1 bis 10.

14. Bildschirm nach Anspruch 13, wobei das Farb-LCD-Panel und das Unbunt-LCD-Panel derart positioniert sind, dass Licht von der Rückbeleuchtung das Unbunt-LCD-Panel beleuchtet und dass durch das Unbunt-LCD-Panel transmittierte Licht das Farb-LCD-Panel beleuchtet.

15. Bildschirm nach Anspruch 13, wobei der Doppel-LCD-Bildschirm als ein Bildschirm mit hohem Dynamikumfang implementiert ist.

## Revendications

1. Dispositif de commande pour un dispositif d'affichage LCD double, le dispositif d'affichage LCD double comprenant :

un écran LCD couleur,
un écran LCD achromatique, et
un rétroéclairage, positionné de telle sorte que de la lumière provenant du rétroéclairage éclaire l'un de l'écran LCD achromatique et de l'écran LCD couleur, et de la lumière transmise à travers ledit un de l'écran LCD achromatique et de l'écran LCD couleur éclaire l'autre de l'écran LCD achromatique et de l'écran LCD couleur ; ledit dispositif de commande incluant :

un sous-système d'excitation d'écran achromatique configuré pour générer des valeurs d'excitation d'écran achromatique déterminant un premier signal d'excitation pour l'écran LCD achromatique en réponse à un signal d'image d'entrée ; et

un sous-système d'excitation d'écran couleur, couplé au sous-système d'excitation d'écran achromatique et configuré pour générer des valeurs d'excitation d'écran couleur déterminant un second signal d'excitation pour l'écran LCD couleur en réponse au signal d'image d'entrée,

**caractérisé en ce que**

la génération des valeurs d'excitation d'écran couleur est sur la base d'un modèle de changement de couleur qui tient compte de variations, et compense ces dernières, de la chromaticité dues au changement de couleur vers le bleu de la lumière transmise par l'écran LCD achromatique en raison de variations du niveau du premier signal d'excitation lorsque ledit écran LCD achromatique est excité par ledit premier signal d'excitation.

**2.** Dispositif de commande selon la revendication 1, dans lequel le sous-système d'excitation d'écran achromatique est configuré pour déterminer un ensemble de valeurs d'excitation d'écran achromatique en réponse à un pixel d'image d'entrée, le sous-système d'excitation d'écran couleur est configuré pour déterminer un ensemble de valeurs d'excitation d'écran couleur en réponse au pixel d'image d'entrée, et le sous-système d'excitation d'écran couleur inclut une table de conversion et est configuré pour lire l'ensemble de valeurs d'excitation d'écran couleur à partir de la table de conversion en réponse au pixel d'image d'entrée et à au moins une valeur déterminant l'ensemble de valeurs d'excitation d'écran achromatique.

**3.** Dispositif de commande selon la revendication 2, dans lequel l'ensemble de valeurs d'excitation d'écran achromatique est une seule valeur d'excitation d'écran achromatique, P, ou

dans lequel l'ensemble de valeurs d'excitation d'écran achromatique est un trio de valeurs d'excitation d'écran achromatique, P1, P2, et P3, pour exciter trois cellules d'un pixel de l'écran LCD achromatique.

**4.** Dispositif de commande selon la revendication 1, dans lequel le sous-système d'excitation d'écran achromatique est configuré pour déterminer un ensemble de valeurs d'excitation d'écran achromatique en réponse à un pixel d'image d'entrée, et le sous-système d'excitation d'écran couleur est configuré pour générer des données déterminant un ensemble de valeurs d'excitation d'écran couleur en réponse au pixel d'image d'entrée et à au moins une valeur déterminant l'ensemble de valeurs d'excitation d'écran achromatique.

**5.** Dispositif de commande selon la revendication 1, dans lequel le sous-système d'excitation d'écran achromatique est configuré pour déterminer un ensemble de valeurs d'excitation d'écran achromatique en réponse à chaque pixel d'image d'entrée d'une séquence de pixels d'image d'entrée, le sous-système d'excitation d'écran couleur est configuré pour déterminer un ensemble de valeurs d'excitation d'écran couleur en réponse à chaque dit pixel d'image d'entrée, et le sous-système d'excitation d'écran couleur est configuré pour réaliser une rotation de couleur pour générer des données déterminant l'ensemble de valeurs d'excitation d'écran couleur, en réponse à chaque dit pixel d'image d'entrée et à au moins une valeur déterminant l'ensemble de valeurs d'excitation d'écran achromatique pour chaque dit pixel d'image d'entrée.

**6.** Dispositif de commande selon la revendication 5, dans lequel le sous-système d'excitation d'écran couleur est configuré pour réaliser la rotation de couleur pour compenser une non-linéarité dans une multiplication optique de l'écran LCD couleur et de l'écran LCD achromatique en réponse aux pixels d'image d'entrée, ou

dans lequel le sous-système d'excitation d'écran couleur est configuré pour réaliser la rotation de couleur pour implémenter un décalage de suivi de niveau de gris dynamique.

**7.** Dispositif de commande selon la revendication 1, dans lequel le sous-système d'excitation d'écran achromatique est configuré pour déterminer un ensemble de valeurs d'excitation d'écran achromatique en réponse à chaque pixel d'image d'entrée d'une séquence de pixels d'image d'entrée, le sous-système d'excitation d'écran couleur est configuré pour déterminer un ensemble de valeurs d'excitation d'écran couleur en réponse à chaque dit pixel d'image d'entrée, et le sous-système d'excitation d'écran couleur est configuré pour réaliser une rotation de couleur interpolée pour générer des données déterminant l'ensemble de valeurs d'excitation d'écran couleur en réponse à chaque dit pixel d'image d'entrée et à au moins une valeur déterminant l'ensemble de valeurs d'excitation d'écran achromatique pour chaque dit pixel d'image d'entrée, y compris en déterminant des premières valeurs d'excitation d'écran couleur pour des pixels d'image d'entrée possédant une première luminance, et en générant des composantes de couleur corrigées par rotation de couleur de composantes de couleur de chaque dit pixel d'image d'entrée selon des quantités déterminées par la différence entre la luminance réelle de chaque dit pixel d'image d'entrée et la première luminance, et en déterminant l'ensemble de valeurs d'excitation d'écran couleur pour chaque dit pixel d'image d'entrée à partir des composantes de couleur d'entrée corrigées et des premières valeurs d'excitation d'écran couleur.

8.  Dispositif de commande selon la revendication 1, dans lequel le sous-système d'excitation d'écran achromatique inclut une table de conversion d'excitation achromatique configurée pour produire en sortie les valeurs d'excitation d'écran achromatique en réponse à des valeurs générées par ledit sous-système d'excitation d'écran achromatique en réponse au signal d'image d'entrée, et le sous-système d'excitation d'écran couleur inclut une table de conversion d'excitation couleur configurée pour produire en sortie les valeurs d'excitation d'écran couleur en réponse au signal d'image d'entrée.

9.  Dispositif de commande selon la revendication 8, dans lequel la table de conversion d'excitation couleur est configurée pour produire en sortie les valeurs d'excitation d'écran couleur en réponse au signal d'image d'entrée et aux valeurs d'excitation d'écran achromatique, ou
    dans lequel la table de conversion d'excitation couleur est configurée pour produire en sortie les valeurs d'excitation d'écran couleur en réponse au signal d'image d'entrée et à des valeurs intermédiaires générées par le sous-système d'excitation d'écran achromatique durant la génération des valeurs d'excitation d'écran achromatique.

10. Dispositif de commande selon la revendication 8, dans lequel la table de conversion d'excitation achromatique est configurée pour produire en sortie les valeurs d'excitation d'écran achromatique en réponse à des valeurs de luminance interpolées et filtrées générées par ledit sous-système d'excitation d'écran achromatique en réponse au signal d'image d'entrée, ou
    dans lequel le sous-système d'excitation d'écran achromatique est configuré pour déterminer un ensemble de valeurs d'excitation d'écran achromatique en réponse à chaque pixel d'image d'entrée d'une séquence de pixels d'image d'entrée, le sous-système d'excitation d'écran couleur est configuré pour générer l'ensemble de valeurs d'excitation d'écran couleur en réponse à chaque dit pixel d'image d'entrée, et la table de conversion d'excitation couleur est configurée pour réaliser une rotation de couleur pour générer l'ensemble de valeurs d'excitation d'écran couleur, en réponse à chaque dit pixel d'image d'entrée et à au moins une valeur déterminant l'ensemble de valeurs d'excitation d'écran achromatique pour chaque dit pixel d'image d'entrée.

11. Procédé pour générer des signaux d'excitation pour un dispositif d'affichage LCD double, le dispositif d'affichage LCD double comprenant :

    un écran LCD couleur,
    un écran LCD achromatique, et
    un rétroéclairage, positionné de telle sorte que de la lumière provenant du rétroéclairage éclaire l'un de l'écran LCD achromatique et de l'écran LCD couleur, et de la lumière transmise à travers ledit un de l'écran LCD achromatique et de l'écran LCD couleur éclaire l'autre un de l'écran LCD achromatique et de l'écran LCD couleur ; ledit procédé incluant les étapes de :

    la génération de valeurs d'excitation d'écran achromatique déterminant un premier signal d'excitation pour l'écran LCD achromatique en réponse à un signal d'image d'entrée ; et
    la génération de valeurs d'excitation d'écran couleur déterminant un second signal d'excitation pour l'écran LCD couleur en réponse au signal d'image d'entrée,

    **caractérisé en ce que**
    la génération des valeurs d'excitation d'écran couleur est sur la base d'un modèle de changement de couleur qui tient compte de variations, et compense ces dernières, de la chromaticité dues au changement de couleur vers le bleu de la lumière transmise par l'écran LCD achromatique en raison de variations du niveau du premier signal d'excitation lorsque ledit écran LCD achromatique est excité par ledit premier signal d'excitation.

12. Procédé selon la revendication 11, dans lequel les valeurs d'excitation d'écran couleur sont lues à partir de la seconde table de conversion en réponse au signal d'image d'entrée et aux valeurs d'excitation d'écran achromatique, ou
    dans lequel les valeurs d'excitation d'écran couleur sont lues à partir de la seconde table de conversion en réponse au signal d'image d'entrée et à des valeurs intermédiaires générées en réponse au signal d'image d'entrée.

13. Dispositif d'affichage LCD double, comprenant :

un écran LCD couleur ;
un écran LCD achromatique ;
un rétroéclairage, positionné de telle sorte que de la lumière provenant du rétroéclairage éclaire l'un de l'écran LCD achromatique et de l'écran LCD couleur, et de la lumière transmise à travers ledit un de l'écran LCD achromatique et de l'écran LCD couleur éclaire l'autre de l'écran LCD achromatique et de l'écran LCD couleur ; et
un dispositif de commande, selon l'une quelconque des revendications 1 à 10.

14. Dispositif d'affichage selon la revendication 13, dans lequel l'écran LCD couleur et l'écran LCD achromatique sont positionnés de telle sorte que de la lumière provenant du rétroéclairage éclaire l'écran LCD achromatique, et de la lumière transmise à travers l'écran LCD achromatique éclaire l'écran LCD couleur.

15. Dispositif d'affichage selon la revendication 13, dans lequel le dispositif d'affichage à écran LCD double est implémenté sous forme de dispositif d'affichage à grande gamme dynamique.

**FIG. 1**

**FIG. 2**

**FIG. 2A**

**FIG. 3A**
*(PRIOR ART)*

**FIG. 3B**

**FIG. 4A**

**FIG. 4B**

{ $R_{in}G_{in}B_{in}$ }

Achromatic
Panel Control
**1680x1050**
_472_

Sub-pixel
Interpolation
and reg.
_476_

Bilateral
Filtering _478_

LCD
Color
Correction
**1920x1080**
_474_

470

{ $P_1, P_2, P_3$ }

{ $R_{out}G_{out}B_{out}$ }

**FIG. 4C**

Achromatic
Panel Drive

Color Panel
Drive

VDR frame
sequence

{ X_{in}Y_{in}Z_{in} }

Global
Tone
Mapping
**_482_**

{ R_{in}G_{in}B_{in} }

Polarization
Control
**(e.g.,
1680x1050)**

472

Sub-pixel
Interpolation
and
registration

476

Bilateral
Filtering

{ P_1, P_2, P_3 }    478

Achromatic
Panel Drive

474

LCD
Color
Correction
**(e.g.,
1920x1080)**

480

{ R_{out}G_{out}B_{out} }

Color Panel
Drive

*FIG. 4D*

FIG. 5

*FIG. 5A*

EP 2 702 445 B1

**FIG. 7**

**REFERENCES CITED IN THE DESCRIPTION**

**Patent documents cited in the description**

- US 61479958 A
- US 78074910 A, Gopal Erinjippurath and John Gilbert
- EP 2569668 A2
- EP 2684184 A2
- US 2008088649 A1